# FASCICULE DE BREVET EUROPEEN

(11) **EP 4 014 288 B1**
(45) Date de publication et mention de la délivrance du brevet: **20.03.2024**
(21) Numéro de dépôt: 20786005.7
(22) Date de dépôt: 10.09.2020
(51) Int. Cl.: H01R 43/02, H01R 43/048, B23K 11/00, H01R 4/18, H01R 43/28, H01R 4/02, B23K 101/36

(54) **PROCÉDÉ ET INSTALLATION DE FABRICATION DE SOUS-ENSEMBLES DE CONNEXION ÉLECTRIQUE**
VERFAHREN UND ANLAGE ZUR HERSTELLUNG VON ELEKTRISCHEN ANSCHLUSSBAUGRUPPEN
METHOD AND FACILITY FOR PRODUCING ELECTRICAL CONNECTION SUBASSEMBLIES

(30) Priorité: 17.09.2019 FR 1910231
(43) Date de publication de la demande: 22.06.2022
(60) Demande divisionnaire: 23218089.3
(73) Titulaire: TECHNAX, 69800 Saint-Priest (FR)
(72) Inventeur: LANTERNIER, Brice, Christian, Jacques, 69330 MEYZIEU (FR); VERNEDE, Laurent, François, Dominique, 69100 VILLEURBANNE (FR)
(74) Mandataire: Cabinet Didier Martin
(86) Numéro de dépôt international: PCT/FR2020/000237
(87) Numéro de publication internationale: WO 2021/053275

(56) Documents cités:
- EP-A1- 2 996 199
- WO-A1-2013/183160
- DE-A1-102011 105 631
- US-A1- 2018 123 303

## Description

### DOMAINE TECHNIQUE

La présente invention se rapporte au domaine technique général des procédés et installations d'assemblage de pièces par soudage, par brasage ou encore par soudo-brasage, ainsi qu'au domaine technique général de la connectique électrique.

L'invention concerne plus précisément un procédé et une installation de fabrication de sous-ensembles de connexion électrique par assemblage d'un conducteur électrique multibrin et d'un élément de connexion, par exemple pour application dans le domaine des véhicules automobiles électriques. L'invention concerne également un sous-ensemble de connexion électrique, pris en tant que tel.

### TECHNIQUE ANTERIEURE

De manière connue, on utilise de tels sous-ensembles de connexion électrique afin de relier électriquement entre eux des équipements ou dispositifs électriques ou électromécaniques de natures diverses. Par exemple, dans le domaine des véhicules automobiles à moteur thermique, des sous-ensembles de connexion électrique sont classiquement utilisés pour relier les bornes de la batterie électrique de démarrage à l'alternateur et au démarreur d'une part, et à la masse du véhicule d'autre part. L'élément de connexion prend alors habituellement la forme d'un collier à serrer sur une borne cylindrique de la batterie, ce collier étant généralement assemblé à l'extrémité d'un conducteur électrique multibrin par vissage ou par sertissage. Si un tel assemblage par vissage ou sertissage est généralement bien adapté pour la réalisation d'un sous-ensemble de connexion électrique destiné à une application de transmission de courants électriques de puissance relativement modérée, il s'avère cependant inadapté quand il s'agit de transmettre de fortes puissances électriques, comme par exemple dans le cas de véhicules automobiles électriques. En effet, un assemblage par vissage ou sertissage tend généralement à induire une forte résistance électrique, ce qui peut générer un échauffement très important, préjudiciable au bon fonctionnement et à la sécurité de la connexion électrique réalisée.

Il a ainsi été proposé d'assembler le conducteur électrique multibrin et l'élément de connexion par brasage, après avoir préalablement procédé à un compactage des brins du conducteur. En l'espèce, le compactage consiste à venir écraser et fusionner entre eux les brins du conducteur électrique au niveau d'une portion d'extrémité de ce dernier afin de faciliter le brasage ultérieur du conducteur électrique avec l'élément de connexion, en évitant la dispersion spatiale des brins du conducteur lors du brasage. En outre, la densification du conducteur électrique ainsi obtenue contribue à diminuer la résistance électrique de l'assemblage. Cependant une telle technique d'assemblage s'avère plus longue et plus coûteuse à mettre en oeuvre qu'un sertissage classique, car elle requiert la mise en oeuvre d'un plus grand nombre d'opérations et de moyens techniques distincts. Qui plus est, il a été observé qu'il est souvent difficile d'obtenir un bon compactage préalable des brins de l'extrémité du conducteur électrique, sans risque de formation d'une zone de brûlure des brins et / ou de défaut d'homogénéité de compactage au niveau de l'extrémité de la portion compactée la plus éloignée du corps du conducteur électrique, de sorte qu'il est généralement nécessaire de procéder à une opération supplémentaire d'ablation de cette extrémité de portion compactée à l'aide d'une cisaille. De plus, les sous-ensembles de connexion électrique obtenus selon une telle technique d'assemblage connue restent perfectibles en matière de respect de contraintes dimensionnelles de l'assemblage final, voire même en matière de fiabilité électrique de l'assemblage final, vis-à-vis de l'environnement dans lequel ces sous-ensembles de connexion sont destinés à être installés.

Le document EP-2 996 199 B1 divulgue un ensemble de connexion comprenant un conducteur et un dispositif de connexion déformé plastiquement autour du conducteur pour former deux faces qui se font face, les deux faces étant reliées l'une à l'autre par une liaison matérielle, un procédé et un outil de fabrication d'un tel assemblage. Le document WO-2013/183160 A1 concerne un procédé de fabrication d'une ligne électrique à raccord métallique de borne, dans lequel on place une portion conductrice multibrin d'une ligne électrique sur une portion de plaque de base d'un raccord métallique de borne, on prend en sandwich ladite portion conductrice multibrin et ladite portion de plaque de base entre une paire d'organes de pressage et on les assemble l'une à l'autre par brasage.

### EXPOSE DE L'INVENTION

Les objets assignés à la présente invention visent en conséquence à remédier aux différents inconvénients énumérés ci-dessus et à proposer un nouveau procédé et une nouvelle installation qui permettent une fabrication rapide, simple et efficace de sous-ensembles de connexion électrique.

Un autre objet de l'invention vise à proposer un nouveau procédé et une nouvelle installation qui permettent la fabrication de sous-ensembles de connexion électrique particulièrement robustes et fiables.

Un autre objet de l'invention vise à proposer un nouveau procédé et une nouvelle installation qui permettent la fabrication de sous-ensembles de connexion électrique à coût avantageux.

Un autre objet de l'invention vise à proposer un nouveau procédé et une installation qui permettent la fabrication de sous-ensembles de connexion électrique de manière particulièrement répétable.

Un autre objet de l'invention vise à proposer une nouvelle installation de fabrication de sous-ensembles de connexion électrique de conception relativement simple et peu encombrante, et de mise en oeuvre aisée.

Un autre objet de l'invention vise à proposer un nouveau sous-ensemble de connexion électrique dont les dimensions de la zone de compactage et de brasage du conducteur électrique et de l'élément de connexion sont particulièrement bien maîtrisées, et qui présente une fiabilité accrue.

Les objets assignés à l'invention sont atteints à l'aide d'un procédé de fabrication d'un sous-ensemble de connexion électrique selon la revendication 1. Les objets assignés à l'invention sont également atteints à l'aide d'une installation selon la revendication 8. Les objets assignés à l'invention sont atteints, en outre, à l'aide d'un sous-ensemble selon la revendication 15.

### DESCRIPTION SOMMAIRE DES DESSINS

D'autres particularités et avantages de l'invention apparaîtront et ressortiront plus en détails à la lecture de la description faite ci-après, en référence aux dessins annexés, donnés uniquement à titre d'exemple illustratif et non limitatif, parmi lesquels :
- la figure 1 illustre, selon une vue latérale, un mode de réalisation d'un sous-ensemble de connexion électrique qui peut être obtenu à l'aide d'un procédé conforme à l'invention ;
- la figure 2 illustre, selon une vue de dessus, le sous-ensemble de connexion électrique de la figure 1 ;
- la figure 3 illustre un exemple de conducteur électrique multibrin concerné par l'invention, dont une portion prédéfinie dénudée, destinée à être compactée et assemblée par brasage à un élément de connexion, est positionnée en une extrémité conducteur électrique ;
- la figure 4 illustre un autre exemple de conducteur électrique multibrin concerné par l'invention, dont une portion prédéfinie dénudée, destinée à être compactée et assemblée par brasage à un élément de connexion, est positionnée en un point choisi à distance des extrémités du conducteur électrique ;
- la figure 5 illustre, de manière schématique, un aspect d'un mode de réalisation préférentiel du procédé de fabrication conforme à l'invention ;
- la figure 6 illustre, de manière schématique, un autre aspect d'un mode de réalisation préférentiel du procédé de fabrication conforme à l'invention ;
- la figure 7 illustre, selon une vue d'ensemble en perspective, un mode de réalisation préférentiel du dispositif d'assemblage d'une installation conforme à l'invention ;
- la figure 8 illustre, selon une vue frontale partielle en perspective, un aspect du dispositif d'assemblage de la figure 7, la mâchoire du dispositif d'assemblage étant en position ouverte ;
- la figure 9 illustre, selon une vue frontale partielle en perspective, un autre aspect du dispositif d'assemblage de la figure 7, la mâchoire 14 du dispositif d'assemblage étant en position fermée ;
- la figure 10 illustre, de manière schématique, une conception particulièrement préférentielle du dispositif d'assemblage des figures 7 à 9 ;
- la figure 11 illustre, selon une vue schématique en coupe transversale, un mode de réalisation préférentiel d'un sous-ensemble de connexion électrique ;
- la figure 12 est une vue au microscope optique d'une coupe transverse d'un sous-ensemble de connexion électrique fabriqué selon un procédé connu.
- la figure 13 est une vue au microscope optique d'une coupe transverse d'un sous-ensemble de connexion électrique fabriqué selon un procédé conforme à l'invention.

### MANIERES DE REALISER L'INVENTION

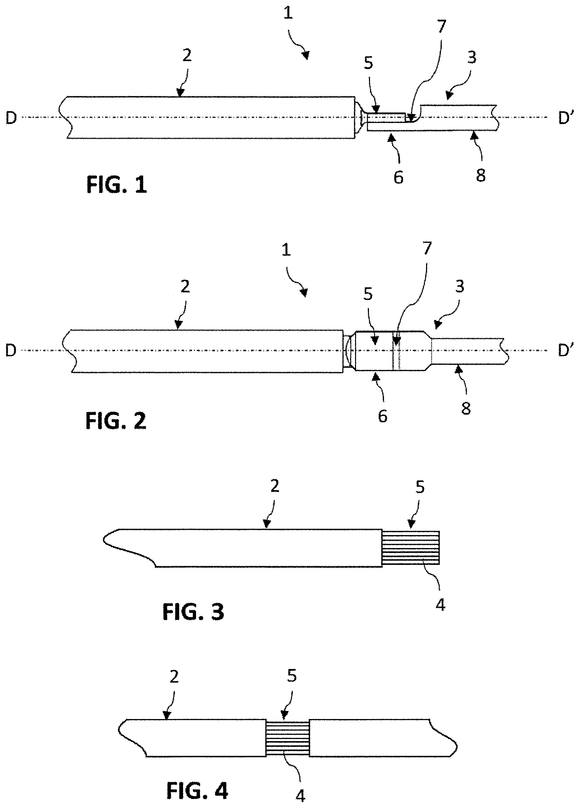

Selon un premier aspect, l'invention concerne un procédé de fabrication d'un sous-ensemble 1 de connexion électrique, tel qu'illustré en exemple aux figures 1 et 2, comprenant une étape d'assemblage d'au moins un conducteur électrique multibrin 2 et d'au moins un élément de connexion 3. Le conducteur électrique multibrin 2, connu en tant que tel, peut prendre la forme d'une tresse, plate ou ronde, ou encore d'un câble ou d'un fil électrique dont les brins, torsadés / toronnés ou non, forment une âme qui est généralement entourée d'un matériau isolant électrique (figures 3 et 4). Les brins 4 du conducteur électrique multibrin 2 peuvent être, par exemple, en cuivre (pur ou en alliage), en aluminium (pur ou en alliage) ou encore en acier, selon l'application à laquelle est destiné le sous-ensemble 1 de connexion électrique. L'âme du conducteur électrique multibrin 2 peut présenter une section de toute dimension. Ainsi, la section de l'âme du conducteur électrique multibrin 2 peut être typiquement comprise entre 0,25 mm² et 200 mm², par exemple entre 25 mm² à 150 mm², par exemple égale à 50 mm². L'élément de connexion 3 est quant à lui un organe ou une pièce métallique de connexion électrique, qui est avantageusement prévu pour assurer la connexion électrique, directe ou indirecte, du conducteur électrique multibrin 2 à un appareil électrique ou électromécanique (non illustré), par exemple pour alimenter ce dernier à l'aide d'un courant électrique circulant dans le conducteur électrique multibrin 2 (cas d'un moteur électrique, par exemple) ou inversement pour collecter auprès de cet appareil électrique ou électromécanique un courant électrique (cas d'une batterie électrique, par exemple). Avantageusement, comme dans l'exemple illustré aux figures, l'élément de connexion 3 est une cosse métallique 3, tel qu'un terminal (ou « raccord terminal ») de connexion. Avantageusement rigide, une telle cosse métallique 3 peut être, par exemple, en cuivre (pur ou en alliage), en aluminium, en laiton ou encore en acier, selon l'application à laquelle est destiné le sous-ensemble 1 de connexion électrique. A la différence d'une cosse à sertir, la cosse métallique 3 est avantageusement dépourvue de portion(s), comme par exemple une ou plusieurs ailes, déformable(s) plastiquement pour sertir la cosse au conducteur électrique multibrin 2. En variante (non illustrée), l'élément de connexion 3 pourrait éventuellement être formé par une portion dénudée, compactée ou non, d'un second conducteur électrique, multibrin ou non. La cosse métallique 3 (ou la portion dénudée, compactée ou non, d'un second conducteur électrique) peut être éventuellement pourvue d'un revêtement métallique, par exemple à base d'étain, d'argent, d'or ou autre, pour protéger la cosse métallique 3 contre l'oxydation ou encore pour en améliorer les propriétés de conduction électrique. Dans le contexte de l'invention, la forme générale de l'élément de connexion 3 n'est pas particulièrement limitée, et pourra bien évidemment dépendre de l'application à laquelle est destiné le sous-ensemble 1 de connexion électrique.

L'étape d'assemblage du procédé conforme à l'invention comprend une opération de fourniture d'un conducteur électrique multibrin 2 et d'un élément de connexion 3, tels que décrits ci-dessus, qui sont alors distincts et non reliés l'un à l'autre. Le conducteur électrique 2 comprend, plus spécifiquement, au moins une portion prédéfinie 5 dénudée, c'est-à-dire dépourvue de matériau isolant électrique, le cas échéant, de sorte que les brins 4 du conducteur électrique 2 sont à nus. De préférence, cette portion prédéfinie 5 dénudée est un portion d'extrémité du conducteur électrique multibrin 2 (figure 3). Néanmoins, il reste parfaitement envisageable que la portion prédéfinie 5 dénudée soit positionnée en un point choisi de la longueur dudit conducteur électrique multibrin 2, situé à distance des extrémités de ce dernier (figure 4). L'élément de connexion 3 présente au moins une portion d'assemblage 6, avantageusement rigide, et pourvue d'une surface d'assemblage 7, au niveau de laquelle ladite portion prédéfinie 5 du conducteur électrique multibrin 2 est destinée à être assemblée, fixée. La surface d'assemblage 7 est de préférence sensiblement plane et lisse, comme dans l'exemple illustré aux figures, mais cette caractéristique n'est pas strictement essentielle, d'autres conformations et états de surface restant envisageables. Tel qu'illustré aux figures 1 et 2, l'élément de connexion 3 (en l'espèce, une cosse métallique 3) comprend avantageusement une portion de connexion 8, qui prolonge ladite portion d'assemblage 6 et qui est destinée à permettre la connexion ultérieure de l'élément de connexion 3 à un appareil électrique ou électromécanique. Cette portion de connexion 8 peut présenter toute forme adaptée à sa fonction, et être percée en vue d'un vissage ou non. Par exemple, la portion de connexion 8 peut être tubulaire ou plane (plaque).

L'étape d'assemblage du procédé conforme à l'invention comprend par ailleurs une opération de compactage de ladite portion prédéfinie 5 du conducteur électrique 2 pour compacter et fusionner au moins partiellement entre eux les brins 4 du conducteur électrique 2 au niveau de ladite portion prédéfinie 5, et une opération de brasage de la portion prédéfinie 5 du conducteur électrique 2 sur ladite surface d'assemblage 7 de l'élément de connexion 3 avec un matériau d'apport 9 (métal d'apport ou alliage métallique d'apport). En tant que telle, l'opération de compactage vise à écraser, à comprimer, les brins 4 du conducteur électrique 2 au niveau de ladite portion prédéfinie 5 et à les fusionner, à les souder, au moins partiellement les uns aux autres, de manière à obtenir une portion préfinie 5 compactée, dense, dont ne s'échappe avantageusement aucun brin 4. La masse volumique de ladite portion prédéfinie 5 est ainsi plus élevée à l'issue de l'opération de compactage qu'elle ne l'est avant. Le compactage permet en outre avantageusement de limiter la surface externe disponible de la portion prédéfinie 5, et donc le risque d'oxydation de cette dernière, ainsi que de favoriser la conduction du courant électrique à travers elle. De manière connue, on vient, au cours d'une telle opération de compactage, comprimer mécaniquement les brins 4 du conducteur électrique 2 tout en apportant une quantité d'énergie suffisante pour provoquer une fusion au moins partielle des brins 4. Cet apport énergétique peut être réalisé de différentes manières, tel que notamment sous la forme d'un courant électrique de forte intensité transmis par une paire d'électrodes de soudage par résistance (« compactage par résistance » ou « *résistance compacting* » ou encore « *résistance welding compacting* ») ou sous la forme de vibrations de fréquences ultrasonores transmises à l'aide d'une sonotrode (« compactage par ultrasons » ou « *ultrasonic welding and compacting »).* L'opération de brasage vise, quant à elle, à relier la portion prédéfinie 5 du conducteur électrique 2 à la surface d'assemblage 7 de l'élément de connexion 3, par établissement d'une liaison métallique entre ces dernières, à l'aide du matériau d'apport 9 de brasage. Par exemple, ce dernier peut être porté à sa température de fusion par induction, par résistance ou encore par vibrations ultrasoniques.

Selon l'invention, lesdites opération de compactage et opération de brasage sont réalisées de manière simultanée, c'est-à-dire en même temps, de manière concomitante, et non de manière séquentielle comme c'est le cas dans les procédés de fabrication de l'art antérieur. Ainsi, la portion prédéfinie 5 du conducteur électrique 2 est simultanément compactée et brasée avec la portion d'assemblage 6 de l'élément de connexion 3, en une seule et même opération. Il en résulte plusieurs avantages notables. En premier lieu, le caractère simultané des opérations de compactage et de brasage permet un évident gain de temps, par réduction du nombre d'opérations successives nécessaires à la fabrication du sous-ensemble 1 de connexion électrique. De plus, lorsque le compactage de la portion prédéfinie 5 du conducteur électrique 2 est ainsi réalisée alors que la portion prédéfinie 5 est en contact avec la surface d'assemblage 7 de l'élément de connexion 3, cette dernière absorbe et dissipe en partie l'énergie thermique apportée pour compacter, fusionner, entre eux les brins 4 du conducteur électrique 2. Cela permet avantageusement, d'une part, de limiter le risque de création de zones de brûlure des brins 4 sous l'effet de l'apport thermique et, d'autre part, d'améliorer l'homogénéité de la densification et de la fusion des brins 4, en particulier au niveau de l'extrémité de la portion prédéfinie 5 la plus éloignée du corps du conducteur électrique 2. Ainsi, contrairement au procédé connu, il n'est pas nécessaire de procéder à une opération supplémentaire de reprise de la portion compactée du conducteur électrique 2. En outre, il a été observé que, lorsque les opérations de compactage et de brasage sont ainsi réalisées de manière simultanée, le matériau d'apport diffuse particulièrement bien entre les brins 4 du conducteur électrique 2, alors même que la portion prédéfinie 5 de ce dernier présente, à l'issue desdites opérations de compactage et de brasage, un niveau de compactage élevé de ses brins 4. Cela contribue à une excellente tenue mécanique de l'assemblage ainsi réalisé. A l'inverse, lorsque les brins du conducteur électrique sont compactés avant brasage pour atteindre un niveau de compactage similaire, le matériau d'apport de brasage diffuse plus difficilement à travers les brins compactés au cours du brasage. Le matériau d'apport tend alors à former une couche d'épaisseur sensiblement constante, plus épaisse, entre la surface d'assemblage de l'élément de connexion et la portion préalablement compactée du conducteur électrique, et à former un congé ou bourrelet au niveau des faces libres de la portion prédéfinie compactée et brasée. Qui plus est, le fait de réaliser simultanément les opérations de compactage et de brasage susvisées, conformément à l'invention, permet avantageusement de réaliser ces opérations de manière plus économe en énergie, et à l'aide de moyens techniques moins nombreux et / ou moins encombrants.

Afin d'obtenir un assemblage mécanique particulièrement robuste du conducteur électrique 2 et de l'élément de connexion 3, le matériau d'apport 9 est, de préférence, un matériau d'apport de brasage fort, c'est-à-dire un matériau destiné à permettre l'assemblage du conducteur électrique 2 sur la surface d'assemblage 7 de l'élément de connexion 3 par brasage et présentant une température de fusion supérieure à 450 °C. La mise en oeuvre d'un tel matériau d'apport de brasage fort est en outre particulièrement bien adaptée pour la fabrication, selon le procédé de l'invention, d'un sous-ensemble 1 de connexion électrique destiné à une application dans laquelle le sous-ensemble 1 de connexion électrique est susceptible d'être exposé à de fortes ou très fortes températures, en particulier sous l'effet du passage d'un courant électrique d'intensité très élevée au sein dudit sous-ensemble 1 de connexion électrique. La composition exacte du matériau d'apport 9 de brasage fort n'est pas spécifiquement limitée et son choix pourra dépendre notamment de l'application à laquelle est destiné le sous-ensemble 1 de connexion électrique. A titre d'exemples, le matériau d'apport 9 peut comprendre un alliage métallique formant une brasure eutectique argent-cuivre (Ag-Cu), titane-nickel (Ti-Ni) ou encore titane-cuivre-nickel (Ti-Cu-Ni) présentant une température de fusion typiquement comprise entre 600 °C et 900 °C, ou une brasure de cuivre ou de laiton (alliage de cuivre et de zinc) présentant typiquement une température de fusion comprise entre 700 °C et 1 180 °C.

De manière avantageuse, la portion prédéfinie 5 du conducteur électrique 2 et la surface d'assemblage 7 de l'élément de connexion 3 sont fournies, au cours de l'étape de fourniture susmentionnée, initialement dépourvues dudit matériau d'apport 9. En d'autres termes, ledit matériau d'apport 9 destiné à l'assemblage du conducteur électrique 2 et de l'élément de connexion 3 par brasage n'est pas déjà présent sur l'un et / ou l'autre desdits conducteur électrique 2 et cosse métallique 3. En particulier, si l'élément de connexion 3 peut être éventuellement pourvu d'un revêtement métallique conducteur, comme envisagé ci-avant, en particulier au niveau de la surface d'assemblage 7 de sa portion d'assemblage 6, le matériau de ce revêtement ne constitue alors pas ledit matériau d'apport 9, c'est-à-dire qu'il n'est pas destiné (en termes notamment de composition et de quantité) à assurer, en tant que tel, l'assemblage par brasage du conducteur électrique 2 et de l'élément de connexion 3. Ainsi, si le matériau d'un tel revêtement est éventuellement susceptible de fondre à une température inférieure à la température de fusion respective des matériaux des brins 4 de conducteur électrique 2 et de la portion d'assemblage 6 de l'élément de connexion 3, il ne contribue cependant pas (ou alors uniquement de manière marginale), après refroidissement, à la tenue mécanique de l'assemblage du conducteur électrique 2 et de l'élément de connexion 3. Dans ce cas, le procédé selon l'invention comprend avantageusement une opération de fourniture du matériau d'apport 9, au cours desdites opérations de compactage et de brasage, depuis une source externe de matériau d'apport 9. Le coût de fabrication du sous-ensemble 1 de connexion électrique peut ainsi être mieux maîtrisé, puisque, d'une part, on peut dès lors mettre en œuvre un conducteur électrique 2 et un élément de connexion 3 moins chers car non déjà pourvus de matériau d'apport 9 et, d'autre part, le positionnement et la quantité exacts du matériau d'apport 9 de brasage peuvent être choisis plus facilement et plus précisément. On pourrait néanmoins envisager, alternativement, que le matériau d'apport 9 soit fourni sur l'un et / ou l'autre des conducteur électrique 2 et élément de connexion 3, préalablement à la réalisation des opérations de compactage et de brasage. Par exemple, le matériau d'apport 9 pourrait être préalablement déposé, fixé, sur la surface d'assemblage 7 de l'élément de connexion 3.

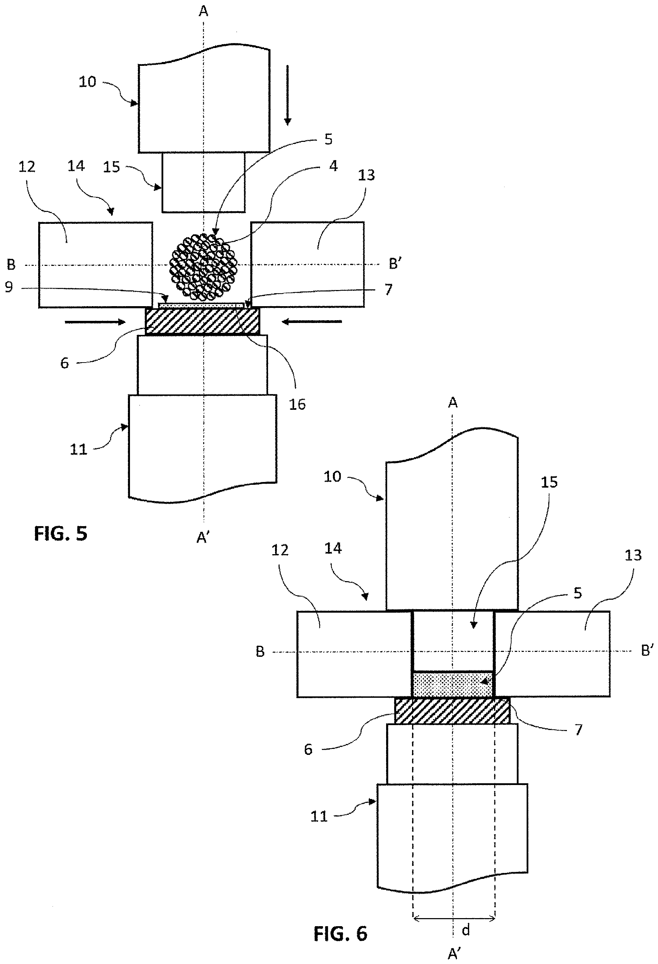

Selon un mode de réalisation préférentiel, illustré de manière schématique aux figures 5 et 6, l'opération de compactage et l'opération de brasage du procédé selon l'invention comprennent plus spécifiquement
- le positionnement de la portion prédéfinie 5 du conducteur électrique 2 en regard de la surface d'assemblage 7 de l'élément de connexion 3, le matériau d'apport 9 étant alors intercalé entre ladite portion prédéfinie 5 et ladite surface d'assemblage 7. Le positionnement du matériau d'apport 9 intercalé entre la portion prédéfinie 5 et la surface d'assemblage 7 résulte en l'espèce, soit du fait que le matériau d'apport 9 est déjà présent sur l'un ou l'autre des conducteur électrique 2 et élément de connexion 3, de sorte qu'une partie au moins (sinon la totalité) du matériau d'apport 9 se trouve agencée entre la portion prédéfinie 5 et la surface d'assemblage 7 lorsque ces dernières sont positionnées l'une en regard de l'autre, soit plus préférentiellement de l'opération susvisée de fourniture du matériau d'apport 9 ;
- le pincement, selon un effort prédéfini, de la portion prédéfinie 5 du conducteur électrique 2, du matériau d'apport 9 et de la portion d'assemblage 6 de l'élément de connexion 3 entre une première électrode 10 et une deuxième électrode 11 selon une première direction A-A' de pincement, la première électrode 10 étant alors avantageusement en contact avec la portion prédéfinie 5 du conducteur électrique 2, tandis que la deuxième électrode 11 est quant à elle en contact avec la portion d'assemblage 6 de l'élément de connexion 3 ;
- la réalisation (simultanée) du compactage et du brasage de la portion prédéfinie 5 du conducteur électrique 2 sur la surface d'assemblage 7 de l'élément de connexion 3, par passage d'un courant électrique entre les première et deuxième électrodes 10, 11, et ce, alors que la portion prédéfinie 5 du conducteur électrique 2 est encadrée, confinée, selon une deuxième direction B-B' perpendiculaire à la première direction A-A' de pincement, par les mors 12, 13 d'une mâchoire 14 (ou étau).

Les opérations de compactage et de brasage sont ainsi avantageusement réalisées de manière simultanée par résistance, l'apport thermique nécessaire à la fusion au moins partielle des brins 4 du conducteur électrique 2 et à la fusion du matériau d'apport 9 étant assuré, par effet Joule, sous l'effet du courant électrique circulant entre les électrodes 10, 11. Préférentiellement formés en un matériau isolant électrique (par exemple en céramique), ou recouverts d'un tel matériau isolant électrique, les mors 12, 13 de la mâchoire 14 forment une butée s'opposant à la déformation de la portion prédéfinie 5 du conducteur électrique 2, selon la deuxième direction B-B' perpendiculaire à la première direction A-A' de pincement, sous l'effort de pincement exercé par les électrodes 10, 11. Les mors 12, 13 sont avantageusement prévus de manière à ce qu'en position fermée de la mâchoire 14 (figure 6), leurs faces en regard des brins de la portion prédéfinie 5 du conducteur électrique 2 sont à une distance d prédéterminée l'une de l'autre qui correspond sensiblement à la largeur que doit avoir la portion prédéfinie 5 du conducteur électrique 2, après compactage et brasage de cette dernière avec l'élément de connexion 3. Les mors 12, 13 restent ainsi avantageusement immobiles en position au cours des opérations de compactage et de brasage. Ils n'exercent alors aucun effort positif à l'encontre de la portion prédéfinie 5 du conducteur électrique 2, et ne font donc que s'opposer à la déformation de la portion prédéfinie 5 du conducteur électrique 2 sous l'effort de pincement imprimé par les électrodes 10, 11.

Avantageusement, la première électrode 10, en contact avec la portion prédéfinie 5 du conducteur électrique 2 au cours des opérations de compactage et de brasage, et les mors 12, 13 de la mâchoire 14 sont prévus de manière à ce que leurs faces positionnées en regard de la portion prédéfinie 5 du conducteur électrique 2 délimitent entre elles la forme que doit acquérir, après compactage et brasage, la portion prédéfinie 5 du conducteur électrique 2 pincée. De la sorte, il est avantageusement possible de mettre en forme la portion prédéfinie 5 du conducteur électrique 2 au cours desdites opérations de compactage et de brasage, selon une conformation prédéfinie qui peut éventuellement dépendre de l'application visée et des contraintes dimensionnelles correspondantes. De préférence, les faces concernées de la première électrode 10 et des mors 12, 13 sont sensiblement planes, la face de la première électrode 10 étant orthogonale à la première direction A-A' de pincement, les faces des mors 12, 13 étant orthogonales à la deuxième direction B-B' d'encadrement (et donc parallèles à la première direction A-A' de pincement). Dans le cas, par exemple, où la surface d'assemblage 7 de l'élément de connexion 3 est plane et orientée de manière orthogonale à la première direction A-A', il est ainsi possible de conférer à la portion prédéfinie 5 du conducteur électrique 2 compactée et brasée une forme parallélépipédique (figure 6). De préférence, les mors 12, 13 présentent chacun une extrémité (portant la face susvisée) dont l'épaisseur est supérieure à celle que doit avoir la portion prédéfinie 5 du conducteur électrique 2, après compactage et brasage de cette dernière avec l'élément de connexion 3. La première électrode 10 présente quant à elle une extrémité amincie 15, dont la largeur est sensiblement égale à la largeur que doit avoir la portion prédéfinie 5 du conducteur électrique 2, après compactage et brasage. L'extrémité amincie 15 de la première électrode 10 est ainsi apte à coulisser étroitement entre les faces des mors 12, 13, et de préférence en contact avec les faces des mors 12, 13, en position fermée de la mâchoire 14 (figure 6).

L'effort prédéfini de pincement exercé par les première et deuxième électrodes 10, 11, ainsi que les valeurs de paramètres du courant électrique circulant entre les électrodes 10, 11 sont avantageusement choisis et paramétrés, en termes notamment de tension, d'intensité ou encore de fréquence, en fonction notamment du degré de compactage (densité / fusion) recherché des brins 4, et des dimensions et matières des brins 4 du conducteur électrique 2, de la portion d'assemblage 6 de l'élément de connexion 3, ainsi que du matériau d'apport 9.

De manière intéressante, il a été observé que la réalisation simultanée d'opérations de compactage et de brasage par résistance, selon un tel mode de réalisation préférentiel du procédé selon l'invention, s'avère en outre plus efficace et plus économe en énergie que la réalisation de ces mêmes opérations par résistance de manière consécutive, séquentielle. En effet, il est généralement désirable de compacter très fortement les brins 4 du conducteur électrique 2. Or ce faisant, la résistance électrique de la portion prédéfinie 5 de conducteur électrique 2 ainsi compactée s'en trouve sensiblement abaissée, de sorte qu'une opération ultérieure de brasage par résistance de la portion prédéfinie 5 ainsi compactée nécessite une forte quantité d'énergie pour atteindre, au niveau de l'interface entre la portion prédéfinie 5 compactée et la surface d'assemblage 7 de l'élément de connexion, une température suffisante pour assurer la fusion du matériau d'apport 9 de brasage. A l'inverse, le caractère simultané des opérations de compactage et de brasage par résistance autorise la mise en oeuvre de puissances électriques moindres, ce qui permet en particulier d'utiliser des moyens techniques de compactage et de brasage moins encombrants et moins coûteux à mettre en oeuvre, et donc de réduire le coût de fabrication unitaire du sous-ensemble 1 de connexion électrique, et d'éviter d'éventuelles dégradations thermiques de la portion prédéfinie 5 du conducteur électrique 2. Enfin, un tel mode de réalisation particulier du procédé selon l'invention favorise encore la diffusion du matériau d'apport 9 à travers les brins 4 de la portion prédéfinie 5 du conducteur électrique 2 dans la première direction A-A' de pincement des électrodes 10, 11. Cela contribue encore à l'excellente tenue mécanique de l'assemblage, et permet en outre avantageusement d'éviter la diffusion, la fuite, du matériau d'apport 9, dans une direction orthogonale à la première direction A-A' de pincement des électrodes 10, 11. Bien entendu, l'invention n'est toutefois pas limitée au mode de réalisation préférentiel exposé ci-dessus, les opérations de compactage et de brasage pouvant être réalisées simultanément de manière différente. Par exemple, les opérations de compactage et de brasage pourraient être l'une et / ou l'autre réalisées par ultrasons, comme déjà évoqué précédemment, ou encore par induction. Néanmoins, de telles alternatives s'avèrent plus lentes, plus complexes et donc plus coûteuses à mettre en oeuvre sur le plan technique, pour des performances inférieures en termes notamment d'homogénéité du compactage et de tenue mécanique de l'assemblage réalisé.

De préférence, comme illustré schématiquement à la figure 5, le matériau d'apport 9 de brasage est, quelle qu'en soit la nature ou la composition, sous forme de feuillard 16 (ou de feuille), c'est-à-dire sous une forme solide sensiblement bidimensionnelle. Un telle forme de feuillard 16 (ou de feuille) permet notamment un meilleur dosage de la quantité de matériau d'apport mis en oeuvre, ainsi qu'une meilleure maîtrise du positionnement du matériau d'apport 9 entre la portion prédéfinie 5 du conducteur électrique 2 et la surface d'assemblage 7 de l'élément de connexion 3, que si le matériau d'apport 9 est choisi sous forme de poudre ou de pâte (ce qui reste néanmoins envisageable). Qui plus est, un tel matériau d'apport 9 sous forme de feuillard 16 est particulièrement bien adapté dans le cas où la surface d'assemblage 7 de la portion d'assemblage 6 de l'élément de connexion 3 est sensiblement plane. L'épaisseur d'un tel feuillard 16 est typiquement comprise entre 0,03 mm et 0,3 mm, mais peut évidemment varier selon notamment la nature et la composition du matériau d'apport 9, du matériau des brins 4 du conducteur électrique 2, et / ou du matériau de la portion d'assemblage 6 de l'élément de connexion 3. Dans le cas, envisagé ci-avant, où le matériau d'apport 9 est déposé, fixé, sur la surface d'assemblage 7 de l'élément de connexion 3 préalablement aux opérations simultanées de compactage et de brasage, un morceau de feuillard 16 peut, par exemple, être découpé aux dimensions requises, puis être fixé, par exemple par point au laser, par résistance électrique ou par tout autre procédé, sur la surface d'assemblage 7 de l'élément de connexion 3. Dans le cas préférentiel où la portion prédéfinie 5 du conducteur électrique 2 et la surface d'assemblage 7 de l'élément de connexion 3 sont, au contraire, fournies initialement dépourvues dudit matériau d'apport 9, un morceau de feuillard 16 est avantageusement intercalé, de préférence de manière automatisée, entre la portion prédéfinie 5 du conducteur électrique 2 et la surface d'assemblage 7 de l'élément de connexion 3 au cours de l'opération de fourniture du matériau d'apport 9, simultanée aux opérations de compactage et de brasage.

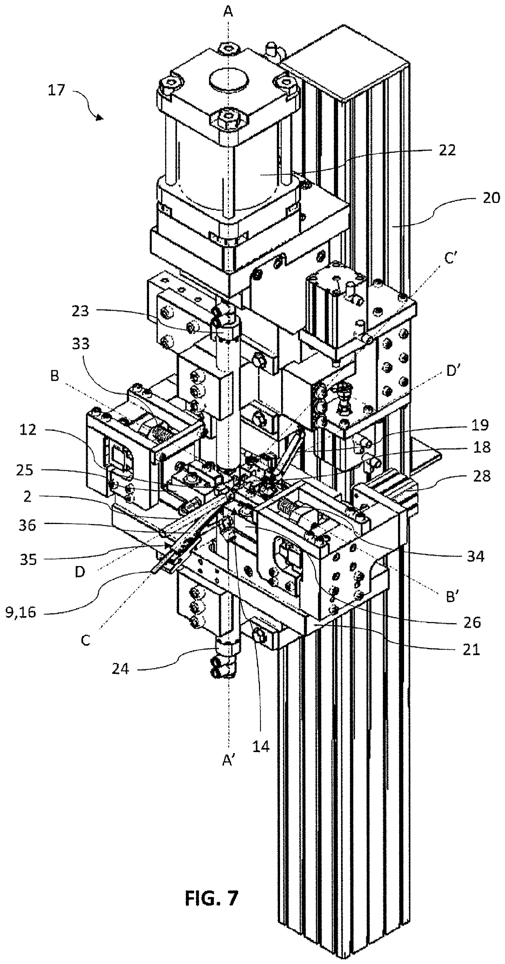

Lorsque le matériau d'apport 9 (quelle qu'en soit la nature, la composition et la forme) est fourni depuis une source externe de matériau d'apport 9, au cours de ladite opération de fourniture du matériau d'apport 9, il est avantageux que le matériau d'apport 9 soit alors fourni selon une troisième direction C-C' coplanaire à une direction d'extension D-D' longitudinale moyenne du conducteur électrique 2 (ou au moins de la portion prédéfinie 5 de ce dernier) et à la première direction A-A' de pincement des électrodes 10, 11. La fourniture du matériau d'apport 9 au cours même des opérations de compactage et de brasage s'en trouve facilitée, en particulier sans gêne liée à la présence et à l'encombrement relatif des électrodes 10, 11 et des mors 12, 13 lorsque ces opérations sont conduites selon le mode de réalisation préférentiel évoqué ci-avant (figure 7). En outre, il a été observé qu'une fourniture du matériau d'apport 9 selon une telle direction contribue avantageusement à limiter encore le risque de diffusion, de fuite, du matériau d'apport 9, dans une direction orthogonale à la première direction A-A' de pincement des électrodes 10, 11 au cours des opérations de compactage et de brasage.

Selon un autre aspect, l'invention concerne également, en tant que telle, une installation de fabrication d'un sous-ensemble 1 de connexion électrique, comprenant un dispositif d'assemblage 17 d'un conducteur électrique multibrin 2 et d'un élément de connexion 3, le conducteur électrique 2 comprenant au moins une portion prédéfinie 5 dénudée, l'élément de connexion 3 présentant une portion d'assemblage 6 pourvue d'une surface d'assemblage 7. L'installation selon l'invention, tel qu'elle va être décrite ci-après, est préférentiellement destinée la mise en oeuvre d'un procédé de fabrication conforme à l'invention, tel que ce dernier a été présenté ci-avant. Ainsi les caractéristiques, définitions, effets et avantages décrits en lien ci-avant avec le procédé selon l'invention s'appliquent avantageusement *mutatis mutandis* à l'installation selon l'invention, et réciproquement. En particulier, le sous-ensemble 1 de connexion électrique, le conducteur électrique multibrin 2, ainsi que l'élément de connexion 3 concernés par l'installation selon l'invention correspondent avantageusement à la présentation qui en a été faite précédemment.

Le dispositif d'assemblage 17 de l'installation conforme à l'invention comprend des moyens de compactage de la portion prédéfinie 5 du conducteur électrique 2 pour compacter et fusionner au moins partiellement entre eux les brins 4 du conducteur électrique 2 au niveau de ladite portion prédéfinie 5, et des moyens de brasage de la portion prédéfinie 5 du conducteur électrique 2 sur la surface d'assemblage 7 de l'élément de connexion 3 avec un matériau d'apport 9. Selon l'invention, le dispositif d'assemblage 17 est conçu, c'est-à-dire configuré, pour actionner simultanément lesdits moyens de compactage et de brasage de sorte que les brins 4 du conducteur électrique 2 au niveau de la portion prédéfinie 5 de ce dernier peuvent être compactés et fusionnés au moins partiellement entre eux, en même temps que la portion prédéfinie 5 du conducteur électrique 2 est brasée sur la surface d'assemblage 7 de l'élément de connexion 3 à l'aide dudit matériau d'apport 9. En d'autres termes, les moyens de compactage et de brasage du dispositif d'assemblage 17 sont aptes à être actionnés simultanément, par exemple par l'intermédiaire d'une unité de commande (non illustrée) que peut avantageusement comprendre l'installation, manuelle ou automatisée, à laquelle sont asservis les moyens de compactage et de brasage, et non de manière séquentielle, séparée dans le temps. Les moyens de compactage et de brasage sont avantageusement prévus pour mettre en oeuvre respectivement l'opération de compactage et l'opération de brasage du procédé selon l'invention, telles que décrites précédemment. Il est ainsi possible, à l'aide de l'installation selon l'invention d'assembler, par compactage et brasage simultanés, le conducteur électrique 2 et l'élément de connexion 3 en une seule et même opération de compactage / brasage, à l'aide d'un seul et même dispositif d'assemblage 17, et ce avec les avantages déjà cités ci-avant en lien avec le procédé selon l'invention.

De préférence, le moyen de brasage du dispositif d'assemblage 17 est apte à, c'est-à-dire configuré pour, braser la portion prédéfinie 5 du conducteur électrique 2 sur la surface d'assemblage 7 de l'élément de connexion 3 avec un matériau d'apport 9 de brasage fort. En particulier, le moyen de brasage est conçu, configuré, pour permettre de porter le matériau d'apport 9 à une température au moins égale à 450°C, de manière à en autoriser la fusion.

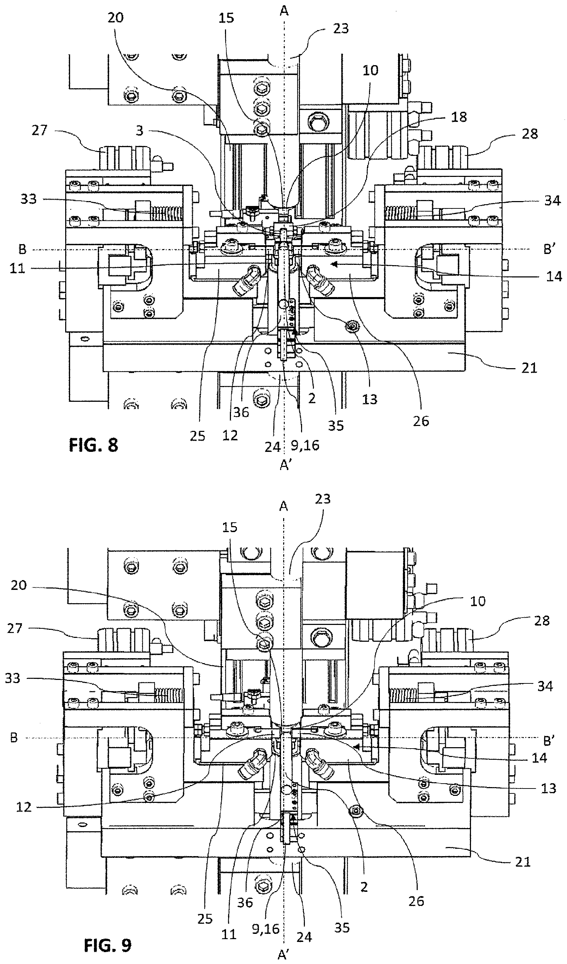

Selon un mode de réalisation préférentiel, et comme illustré en exemple aux figures 7 à 9, les moyens de compactage et les moyens de brasage du dispositif d'assemblage 17 comprennent
- des moyens de positionnement relatifs de la portion prédéfinie 5 du conducteur électrique 2 en regard de la surface d'assemblage 7 de l'élément de connexion 3, et du matériau d'apport 9 intercalé entre ladite portion prédéfinie 5 et ladite surface d'assemblage 7,
- une première électrode 10 et une deuxième électrode 11, aptes à (c'est-à-dire configurées pour) pincer entre elles la portion prédéfinie 5 du conducteur électrique 2, le matériau d'apport 9 et la portion d'assemblage 6 de l'élément de connexion 3 selon une première direction A-A' de pincement,
- une mâchoire 14 (ou étau) dont les mors 12, 13 sont aptes à (c'est-à-dire configurés pour) encadrer, à confiner, entre eux ladite portion prédéfinie 5 du conducteur électrique 2 selon une deuxième direction B-B' perpendiculaire à ladite première direction A-A' de pincement des électrodes 10, 11, et
- un système d'alimentation électrique (non illustré) conçu (c'est-à-dire configuré) pour faire passer entre les première et deuxième électrodes 10, 11 un courant électrique pour permettre le compactage et la fusion (au moins partielle) des brins 4 de la portion prédéfinie 5 du conducteur électrique 2 et le brasage de la portion prédéfinie 5 du conducteur électrique 2 sur ladite surface d'assemblage 7 de l'élément de connexion 3.

Dans ce mode de réalisation préférentiel, les moyens de compactage et les moyens de brasage du dispositif d'assemblage 17 sont ainsi conçus, configurés, pour permettre à la fois le compactage et le brasage par résistance (comme déjà explicité ci-avant en lien avec le procédé selon l'invention) de ladite portion prédéfinie 5 du conducteur électrique 2 avec la portion d'assemblage 6 de l'élément de connexion 3. Les moyens de compactage et de brasage du dispositif d'assemblage 17 sont avantageusement confondus au moins en partie, ce qui contribue à la simplicité de conception et à la compacité de l'installation selon l'invention. Bien entendu, l'invention n'est toutefois pas limitée à un tel mode de réalisation préférentiel de l'installation exposé ci-dessus, les moyens de compactage et les moyens de brasage pouvant l'un et / ou l'autre de technologies et de conceptions différentes (par ultrasons, par induction, etc.). Néanmoins, des telles alternatives s'avèrent plus lentes, plus complexes et donc plus coûteuses à mettre en oeuvre sur le plan technique, pour des performances inférieures en termes notamment d'homogénéité du compactage et de tenue mécanique de l'assemblage réalisé.

Dans le mode de réalisation illustré aux figures 7 à 9, lesdits moyens de positionnement relatifs de la portion prédéfinie 5 du conducteur électrique 2 en regard de la surface d'assemblage 7 de l'élément de connexion 3, et du matériau d'apport 9 intercalé entre ladite portion prédéfinie 5 et ladite surface d'assemblage 7 comprennent avantageusement
- un support 18 d'élément de connexion 3 (ou « porte-cosse » lorsque l'élément de connexion 3 est une cosse), tel qu'un drageoir, prévu pour recevoir et maintenir en position l'élément de connexion 3, de préférence par l'intermédiaire d'une portion de cette dernière qui est distincte de ladite portion d'assemblage 6 (typiquement, par l'intermédiaire de la portion de connexion 8 de l'élément de connexion 3), et
- un support (non illustré) de conducteur électrique multibrin 2, par exemple de type drageoir lui-aussi, prévu pour recevoir et maintenir en position le conducteur électrique multibrin 2, de telle sorte que la portion prédéfinie 5 de ce dernier soit positionnée en regard de la surface d'assemblage 7 de la portion d'assemblage 6 de l'élément de connexion 3, qui est elle-même positionnée dans le support 18 d'élément de connexion 3.

En particulier dans le cas où la portion prédéfinie 5 du conducteur électrique 2 à assembler se situe en une extrémité du conducteur électrique 2, lesdits moyens de positionnement relatifs peuvent en outre comprendre un organe de butée 19 (ou doigt de mise en référence), avantageusement amovible ou rétractable, afin de garantir une parfaite indexation de la portion prédéfinie 5 en regard de la surface d'assemblage 7 de l'élément de connexion 3 par mise en butée de la portion prédéfinie 5 contre ledit organe de butée 19. Alternativement, un tel organe de butée pourrait être remplacé par un dispositif de mise en référence automatique, prévu pour amener de lui-même la portion prédéfinie 5 du conducteur électrique 2 en position. De préférence, le dispositif d'assemblage 17 comprend un bâti 20, auquel est fixé un bloc de support 21, sur lequel sont fixés le support 18 d'élément de connexion 3, le support de conducteur électrique multibrin 2 et l'organe de butée 19, le cas échéant.

Toujours dans le mode de réalisation illustré aux figures 7 à 9, la première direction A-A' est sensiblement verticale, la première électrode 10 formant une électrode supérieure, tandis que la deuxième électrode 11 forme une électrode inférieure. Quoique moins préférée, un configuration spatiale différente pourrait être envisagée. De préférence, la première électrode 10 est destinée à venir en contact avec la portion prédéfinie 5 du conducteur électrique 2, tandis que la deuxième électrode 11 est quant à elle destinée à venir en contact avec la portion d'assemblage 6 de l'élément de connexion 3. Afin notamment de simplifier et de fiabiliser la conception du dispositif d'assemblage 17, la deuxième électrode 11 est préférentiellement montée immobile relativement au bâti 20, tandis que la première électrode 10, montée mobile relativement au bâti 20, est mue à translation selon la première direction A-A' de pincement à l'aide d'un premier vérin 22, lequel est de préférence pneumatique. Ceci étant, il reste envisageable que la deuxième électrode 11 soit elle-aussi montée mobile relativement au bâti 20 et mue à translation selon la première direction A-A' de pincement à l'aide d'un vérin. Il est également alternativement envisageable que la deuxième électrode 11 soit montée de manière amovible relativement au bâti 20, de manière à rester immobile au cours des opérations de compactage et de brasage, mais à pouvoir être déplacée et immobilisée dans une autre position ou altitude relativement au bâti 20. Typiquement, ce premier vérin 22 est dimensionné pour exercer un effort F1 de pincement entre les première et deuxième électrodes 10, 11 qui peut être compris entre 50 daN et 1 200 daN, selon notamment la section du conducteur électrique multibrins 2 concerné. Une vanne proportionnelle peut être avantageusement prévue pour régler automatiquement l'effort F1 de pincement exercé. Optionnellement un capteur de pression, par exemple piézo-électrique, peut être prévu pour contrôler l'effort F1 de pincement exercé. De manière avantageuse, le dispositif d'assemblage 17 comprend un système de contrôle de la course de la première électrode 10 selon ladite première direction A-A' de pincement, conçu pour permettre à la première électrode 10 de se déplacer, depuis une position initiale inactive, selon une première course dite « d'approche » (par exemple sous l'effet du poids propre de la première électrode 10) à l'issue de laquelle la première électrode 10 est en contact avec la portion prédéfinie 5 du conducteur électrique 2, puis selon une seconde course dite « de travail » suivant laquelle la première électrode 10 est alors apte à exercer l'effort F1 de pincement à l'encontre de la deuxième électrode 11.

Préférentiellement formés en un matériau isolant électrique (par exemple en céramique), ou recouverts d'un tel matériau isolant électrique, les mors 12, 13 de la mâchoire 14 forment une butée s'opposant à la déformation de la portion prédéfinie 5 du conducteur électrique 2, selon la deuxième direction B-B' d'encadrement perpendiculaire à la première direction A-A' de pincement, sous l'effort F1 de pincement exercé par les électrodes 10, 11. Dans le mode de réalisation illustré aux figures 7 à 9, la mâchoire 14 est fixée au bloc de support 21, les mors 12, 13 étant montés mobiles en translation à l'encontre l'un de l'autre suivant la deuxième direction B-B' d'encadrement, laquelle est sensiblement horizontale. Alternativement, il pourrait être envisageable que l'un des mors 12, 13 soit immobile, solidarisé au bloc de support 21, tandis que l'autre des mors 12, 13 est mobile à translation selon la deuxième direction B-B' d'encadrement. Les mors 12, 13 sont avantageusement prévus de manière à ce qu'en position fermée de la mâchoire 14, leurs faces en regard des brins de la portion prédéfinie 5 du conducteur électrique 2 sont à une distance d prédéterminée l'une de l'autre qui correspond sensiblement à la largeur que doit avoir la portion prédéfinie 5 du conducteur électrique 2, après compactage et brasage de cette dernière avec l'élément de connexion 3.

Avantageusement, la première électrode 10 est destinée à venir en contact avec la portion prédéfinie 5 du conducteur électrique 2, et les faces respectives de la première électrode 10 et des mors 12, 13, qui sont destinées à venir en regard de la portion prédéfinie 5 du conducteur électrique 2, délimitent entre elles la forme que doit acquérir, après compactage, fusion et brasage, la portion prédéfinie 5 du conducteur électrique 2 pincée. Le dispositif d'assemblage 17 permet ainsi avantageusement une mise en forme de la portion prédéfinie 5 du conducteur électrique 2 au cours du compactage et du brasage, selon une conformation prédéfinie qui peut éventuellement dépendre de l'application visée et des contraintes dimensionnelles correspondantes. Dans l'exemple illustré aux figures 7 à 9, les faces concernées de la première électrode 10 et des mors 12, 13 sont sensiblement planes, la face de la première électrode 10 étant orthogonale la première direction A-A' de pincement, les faces des mors 12, 13 étant orthogonales à la deuxième direction B-B' d'encadrement (et donc parallèles à la première direction A-A' de pincement). Dans le cas, par exemple, où l'élément de connexion 3, positionné dans le dispositif d'assemblage 17, présente une surface d'assemblage 7 plane et orientée de manière orthogonale à la première direction A-A', il est ainsi possible de conférer à la portion prédéfinie 5 du conducteur électrique 2 compactée et brasée une forme sensiblement parallélépipédique. De préférence, les mors 12, 13 présentent chacun une extrémité (portant la face susvisée) dont l'épaisseur est supérieure à celle que doit avoir la portion prédéfinie 5 du conducteur électrique 2, après compactage et brasage de cette dernière avec l'élément de connexion 3. La première électrode 10 présente quant à elle une extrémité amincie 15, dont la largeur est sensiblement égale à la largeur que doit avoir la portion prédéfinie 5 du conducteur électrique 2, après compactage et brasage. L'extrémité amincie 15 de la première électrode 10 est ainsi avantageusement apte à coulisser étroitement entre les faces des mors 12, 13, et de préférence en contact avec les faces des mors 12, 13, en position fermée de la mâchoire 14.

Afin de faciliter la maintenance de l'installation, mais également afin de pouvoir adapter aisément et rapidement cette dernière à des conducteurs électriques multibrins 2 et à des éléments de connexion 3 de formes et dimensions diverses, les moyens de positionnement relatifs de la portion prédéfinie 5 du conducteur électrique 2 en regard de la surface d'assemblage 7 de l'élément de connexion 3, et du matériau d'apport 9 sont montés de manières amovible relativement au bâti 20. Pour les mêmes raisons, chacune des électrodes 10, 11 peut être avantageusement montée de manière amovible dans un porte-électrode 23, 24 correspondant. La mâchoire 14 peut quant à elle avantageusement comprendre une paire de porte-mors 25, 26 prévus pour recevoir respectivement de manière amovible une paire de mors 12, 13 correspondante, de formes et ou de dimensions éventuellement différentes. En outre, les porteélectrodes 23, 24 et / ou les porte-mors 25, 26 et / ou le support 18 d'élément de connexion peuvent être avantageusement pourvus d'un système de refroidissement interne à eau (ou à huile).

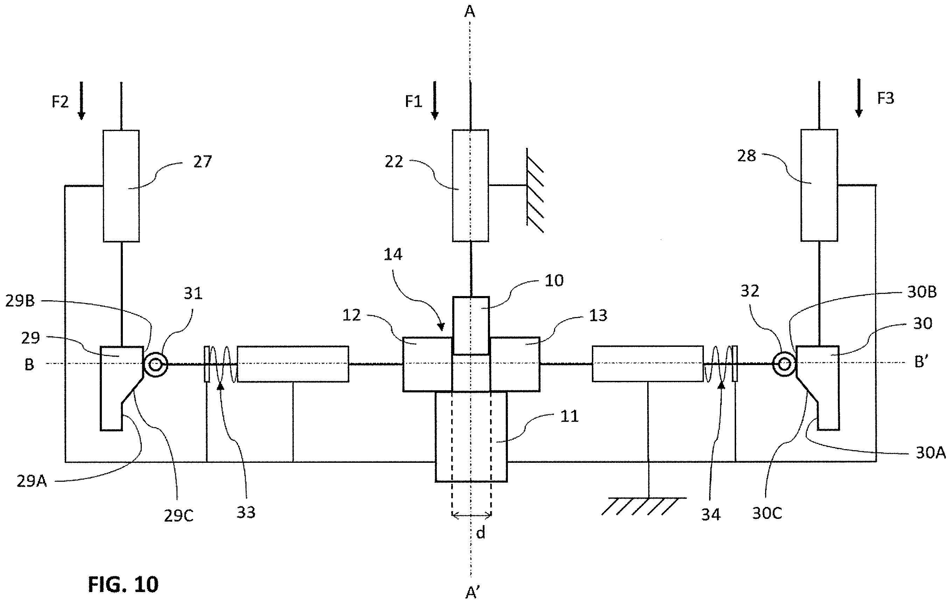

De manière avantageuse, et tel qu'illustré schématiquement à la figure 10, le dispositif d'assemblage 17 comprend, pour chacun des mors 12, 13 de la mâchoire 14, un actionneur conçu pour déplacer le mors 12, 13 en translation selon ladite deuxième direction B-B' entre une position ouverte et une position fermée de la mâchoire 14. L'actionneur comprend un vérin 27, 28 dont la tige est apte à se déplacer selon une direction sécante (et de préférence, orthogonale) à ladite deuxième direction B-B' et qui est reliée audit mors 12, 13 par un moyen de renvoi d'angle à came. Le dispositif d'assemblage 17 comprend ainsi avantageusement un deuxième vérin 27 et un troisième vérin 28 (par exemple pneumatiques), exerçant respectivement un deuxième effort F2 et un troisième effort F3, et dont les tiges respectives s'étendent et se déplacent linéairement selon une direction (par exemple horizontale) sécante à la deuxième direction B-B' d'encadrement. A chacun des mors 12, 13 est associé un moyen de renvoi d'angle à came comprenant, d'une part, une came 29, 30 fixée à la tige du vérin 27, 28 et, d'autre part, un galet 31, 32 relié au mors 12, 13 correspondant, le galet 31, 32 coopérant avec la came 29, 30 de telle sorte que le déplacement de la tige du vérin 27, 28 entraîne un déplacement du mors 12, 13 selon la deuxième direction B-B' d'encadrement dans le sens de fermeture de la mâchoire 14. Des moyens de rappel élastique, comprenant par exemple un ou plusieurs ressorts boudins 33, 34, peuvent en outre être avantageusement prévus pour rappeler automatiquement les mors 12, 13 de la mâchoire 14 en position ouverte. Grâce à un tel renvoi d'angle à came, il est avantageusement possible d'exercer, à l'aide des électrodes 10, 11, un effort F1 de pincement très important, sans qu'il ne soit nécessaire pour autant de mettre en oeuvre, afin d'empêcher l'ouverture des mors 12, 13 en réaction à l'effort de pincement F1 exercé, des deuxième et troisième vérins 27, 28 d'actionnement des mors 12, 13 particulièrement puissants, et typiquement au moins aussi puissants (et donc notamment aussi encombrants et coûteux) que le premier vérin 22 prévu pour actionner la première électrode 10. Il en résulte ainsi un gain de compacité, ainsi qu'un gain en matière de coût de conception et de fonctionnement de l'installation. De manière plus avantageuse encore, la came 29, 30 du moyen de renvoi d'angle présente un profil prévu pour interdire toute translation du mors 12, 13 correspondant selon ladite deuxième direction B-B' dans un sens d'ouverture de la mâchoire 14 lorsque ladite mâchoire 14 est en position fermée. Comme illustré schématiquement à la figure 10, chaque came 29, 30 peut ainsi, par exemple, présenter une première portion 29A, 30A de profil et une deuxième portion 29B, 30B de profil, formant des plateaux et reliée entre elles par une portion de rampe 29C, 30C. Ces première et deuxième portions 29A, 30A, 29B, 30B de profil sont orientées selon une direction orthogonale à la deuxième direction B-B' d'encadrement des mors 12, 13, et positionnées à deux altitudes différentes , de telle sorte que lorsque le galet 31, 32 coopère avec la première portion 29A, 30A de profil, la mâchoire 14 est en position ouverte, et lorsque la came 29, 30 se déplace, sous l'effet de l'effort F2, F3 exercé par le vérin 27, 28 de l'actionneur, et que le galet 31, 32 coopère avec la deuxième portion de profil, la mâchoire 14 passe alors en position fermée. Ainsi, lorsque les mors 12, 13 sont en position fermée (figure 10), ces derniers sont avantageusement verrouillés en position, et ne transmettent à la portion prédéfinie 5 du conducteur électrique 2 aucun effort F2, F3 généré par leur vérin 27, 28 respectif. Réciproquement, les mors 12, 13 ne transmettent en retour à leur vérin 27, 28 respectif aucun effort généré par la portion prédéfinie 5 du conducteur électrique 2 à leur encontre en réaction à l'effort de pincement F1 exercé par les électrodes 10, 11. Une telle conception particulière permet notamment de garantir de manière fiable et répétable le maintien de la distance d prédéfinie constante au cours du compactage et du brasage.

Avantageusement, le système d'alimentation électrique des première et deuxième électrodes 10, 11 comprend quant à lui un générateur de courant électrique, par exemple un générateur moyenne fréquence 1 000 Hz, conçu pour délivrer un courant électrique d'une intensité qui peut être comprise entre 500 A et 80 000 A.

De manière avantageuse, l'installation selon l'invention comprend un moyen de fourniture 35 du matériau d'apport 9 depuis une source de matériau d'apport 9 distincte du conducteur électrique 2 et de l'élément de connexion 3. De préférence, le moyen de fourniture 35 du matériau d'apport 9 est conçu pour fournir ce dernier de manière automatisée ou semi-automatisée. L'installation est ainsi avantageusement prévue pour permettre l'assemblage par brasage d'une portion prédéfinie 5 dénudée de conducteur électrique multibrin 2 et d'une portion d'assemblage 6 d'un élément de connexion 3, qui sont initialement dépourvues de matériau d'apport 9 de brasage. Le moyen de fourniture 35 du matériau d'apport 9 comprend avantageusement une tête d'amenée 36 du matériau d'apport 9 prévue pour amener le matériau d'apport 9 sur, ou en regard de, la surface d'assemblage 7 de l'élément de connexion 3, préférentiellement une fois l'élément de connexion 3 en position dans le support 18 d'élément de connexion.

Selon une variante préférentielle, le moyen de fourniture 35 du matériau d'apport 9 est conçu, c'est-à-dire configuré, pour fournir le matériau d'apport 9 sous forme de feuillard 16 (ou de feuille). Si l'on se réfère à nouveau au mode de réalisation illustré aux figures 7 à 9, le moyen de fourniture peut ainsi comprendre un dévidoir (non illustré) de feuillard 16 en rouleau et une tête d'amenée 36, qui forme alors avantageusement un moyen de positionnement relatif du matériau d'apport 9 intercalé entre la portion prédéfinie 5 du conducteur électrique 2 et la surface d'assemblage 7 de l'élément de connexion 3. Alternativement, le moyen de fourniture 35 pourrait être prévu pour venir déposer, par exemple sur la surface d'assemblage 7 de l'élément de connexion 3, un matériau d'apport 9 sous forme poudreuse ou pâteuse.

De préférence, quelle que soit la nature, la composition et la forme du matériau d'apport 9, le moyen de fourniture 35 du matériau d'apport 9 est conçu et configuré pour fournir ce dernier selon une troisième direction C-C' coplanaire à une direction d'extension D-D' longitudinale moyenne du conducteur électrique 2 (ou au moins de la portion prédéfinie 5 de ce dernier) et à la première direction A-A' de pincement des première et deuxième électrodes 10, 11. Comme cela est visible aux figures 7 à 9, la fourniture du matériau d'apport 9 au niveau des moyens de compactage et de brasage s'en trouve facilitée, en particulier sans gêne liée à la présence et à l'encombrement relatif des électrodes 10, 11 et des mors 12, 13 de la mâchoire 14.

Typiquement, la fabrication d'un sous-ensemble 1 de connexion électrique selon le procédé de fabrication conforme à l'invention, à l'aide de l'installation décrite ci-avant en lien avec le mode de réalisation préférentiel des figures 7 à 10, peut se dérouler comme suit :
(a) on fournit un conducteur électrique multibrin 2 et un élément de connexion 3 (par exemple, une cosse métallique 3), conformes à la description qui précède et initialement dépourvus de matériau d'apport 9 de brasage ;
(b) on assemble le connecteur électrique 2 et l'élément de connexion 3, en réalisant de manière simultanée un compactage et un brasage de la portion prédéfinie 5 du conducteur électrique 2 sur la surface d'assemblage 7 de l'élément de connexion 3 avec un matériau d'apport 9, de la manière suivante :
   (i) on positionne tout d'abord l'élément de connexion 3, de manière manuelle ou automatisée, dans le support 18 d'élément de connexion, par l'intermédiaire de sa portion de connexion 8. Puis on fournit et positionne, de manière manuelle ou automatisée, le matériau d'apport 9 (de préférence, de brasage fort) sous forme de feuillard 16 à l'aide du dispositif de fourniture 35 et de sa tête d'amenée 36, de telle sorte que le matériau d'apport 9 est agencé au-dessus et en regard de la surface d'assemblage 7 de l'élément de connexion 3. Enfin, on positionne, de manière manuelle ou automatisée, le conducteur électrique 2, à l'aide du support de conducteur électrique et de l'organe de butée 19, de manière à ce que la portion prédéfinie 5 dénudée du conducteur électrique 2 soit positionnée au-dessus en regard de la surface d'assemblage 7 de l'élément de connexion 3, le matériau d'apport 9 étant alors intercalé entre a portion prédéfinie 5 et la surface d'assemblage 7. Alternativement, on pourrait bien évidemment positionner le matériau d'apport 9 après avoir positionné le conducteur électrique 2 et l'élément de connexion 3, voire même simultanément à la mise en position de ces derniers ;
   (ii) on commande la descente de la première électrode 10 (électrode supérieure), sous son propre poids, selon sa course d'approche, jusqu'à amener la première électrode 10 en contact avec la portion prédéfinie 5 du conducteur électrique 2, puis on commande le déplacement des mors 12, 13 afin de fermer la mâchoire 14 ;
   (iii) on commande la descente de la première électrode 10 (électrode supérieure), sous l'effet du premier vérin 22, selon sa course de travail, afin d'exercer un effort de pincement prédéfini à l'encontre de la deuxième électrode 11 (électrode inférieure) fixe, tout en commandant le système d'alimentation électrique des électrodes 10, 11 de manière à faire circuler entre elles un courant électrique suffisant pour provoquer la fusion au moins partielle des brins 4 du conducteur électrique 2 et la fusion du matériau d'apport 9 ;
   (iv) puis, on commande l'arrêt du système d'alimentation électrique des électrodes 10, 11, de préférence en fonction de l'atteinte d'une valeur de paramètre prédéfinie (temps, température, distance parcourue par la première électrode, effort de pincement, ou autre), et on remonte la première électrode 10 jusqu'à sa position initiale inactive ;
   (v) on commande l'ouverture de la mâchoire 14 ;
   (vi) puis on décharge le sous-ensemble 1 de connexion électrique ainsi fabriqué.

Selon encore un autre aspect, l'invention concerne, en tant que tel, un sous-ensemble 1 de connexion électrique, comprenant au moins un conducteur électrique multibrin 2 et au moins un élément de connexion 3, le conducteur électrique 2 comprenant au moins une portion prédéfinie 5 (préférentiellement dénudée) au niveau de laquelle les brins 4 du conducteur électrique 2 sont compactés et au moins partiellement fusionnés entre eux, ladite portion prédéfinie 5 du conducteur électrique 2 étant brasée à l'aide d'un matériau d'apport 9 sur une surface d'assemblage 7 d'une portion d'assemblage 6 de l'élément de connexion 3. Le sous-ensemble 1 de connexion électrique est ainsi formé d'un assemblage par brasage de la portion prédéfinie 5 du conducteur électrique 2 et de la portion d'assemblage 6 de l'élément de connexion 3. De manière avantageuse, le sous-ensemble 1 de connexion électrique conforme à l'invention est un sous-ensemble de connexion électrique fabriqué selon le procédé de fabrication de l'invention décrit ci-avant, et / ou à l'aide de l'installation de fabrication de l'invention qui a également été décrite ci-dessus. En l'espèce, le sous-ensemble 1 de connexion électrique conforme à l'invention répond avantageusement à la description détaillée qui en a été faite dans ce qui précède, en lien avec les exemples des figures 1 à 4. De préférence, ledit élément de connexion 3 est une cosse métallique 3. A la différence d'une cosse à sertir, la cosse métallique 3 est avantageusement dépourvue de portion(s), comme par exemple une ou plusieurs ailes, déformée(s) plastiquement à l'encontre du conducteur électrique 2 pour assurer le sertissage de la cosse au conducteur électrique multibrin 2.

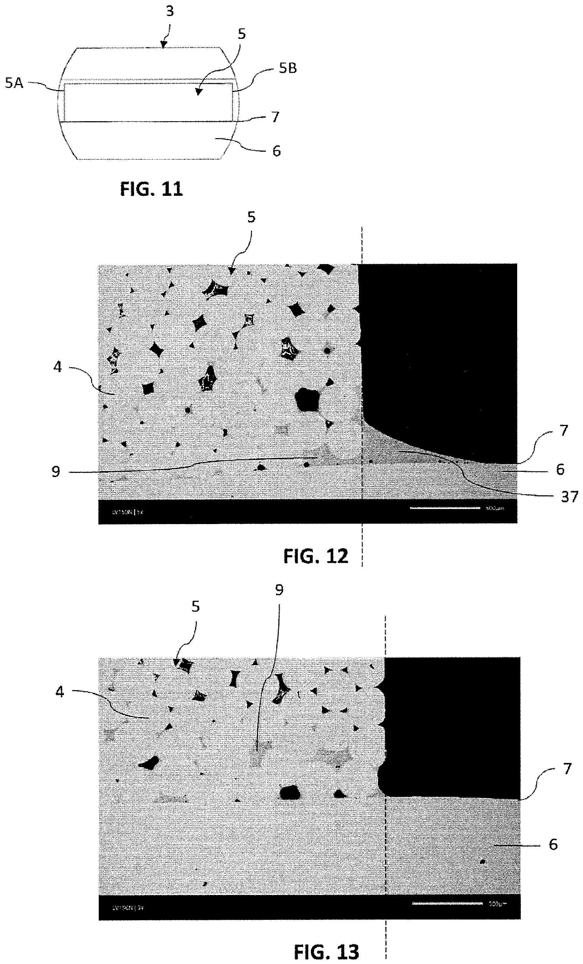

Selon l'invention, et comme illustré en particulier sur la vue schématique en coupe transversale de la figure 11, ladite portion prédéfinie 5 (compactée) du conducteur électrique 2 présente deux faces latérales 5A, 58, qui s'étendent l'une en regard de l'autre, de part et d'autre d'une direction D-D' d'extension longitudinale moyenne du conducteur électrique 2 (ou au moins de la portion prédéfinie 5 de ce dernier), et de manière sécante à ladite surface d'assemblage 7. Comme illustré aux figures, lesdites faces latérales 5A, 5B sont avantageusement libres, c'est-à-dire qu'elles ne sont pas en contact contre, ni même encadrées par, une surface correspondante de la portion d'assemblage 6 de l'élément de connexion 3.

Comme illustré aux figures 1 et 2, la portion prédéfinie 5 compactée du conducteur électrique 2 est préférentiellement positionnée à une extrémité du conducteur électrique 2, et présente une forme sensiblement parallélépipédique. Les faces latérales 5A, 5B de la portion prédéfinie 5 compactée du conducteur électrique 2 sont sensiblement parallèles entre elles et orthogonales à la surface d'assemblage 7. Cette dernière, au niveau de laquelle la portion prédéfinie 5 compactée est brasée à l'élément de connexion 3, est sensiblement plane. Avantageusement, la portion prédéfinie 5 compactée est de dimensions inférieures à celles de la surface d'assemblage 7 de l'élément de connexion 3, de sorte que les faces latérales 5A, 5B de la portion prédéfinie 5 sont positionnées en retrait des bords de ladite surface d'assemblage 7, comme cela est illustré à la figure 11. Néanmoins, selon une variante non illustrée, les dimensions de la portion prédéfinie 5 compactée et de la surface d'assemblage 7 de l'élément de connexion 3 pourraient être sensiblement identiques, de sorte que les faces latérales 5A, 5B de la portion prédéfinie 5 seraient alors alignées avec les bords de la surface d'assemblage 7.

De préférence, le matériau d'apport 9, avec lequel la portion prédéfinie 5 compactée du conducteur électrique 2 est brasée à la portion d'assemblage 6 de l'élément de connexion 3, est un matériau d'apport de brasage fort, comme défini précédemment, ce qui confère une excellente résistance mécanique et thermique au sous-ensemble 1 de connexion électrique. La présence et la nature du matériau d'apport 9 peut être observée, caractérisée, par tout moyen connu, et notamment après réalisation d'une coupe transversale du sous-ensemble 1 au niveau de la portion prédéfinie 5 permettant d'observer l'interface entre la portion prédéfinie 5 du conducteur électrique 2 et la surface d'assemblage 7 de l'élément de connexion 3, ainsi que l'espace interstitiel résiduel entre les brins 4 compactés de la portion prédéfinie 5. Avantageusement, le matériau d'apport 9 s'étend, au niveau de l'interface entre la portion prédéfinie 5 du conducteur électrique 2 et la surface d'assemblage 7 de l'élément de connexion 3, d'une desdites faces latérales 5A, 5B à l'autre, de sorte que ledit matériau d'apport 9 assure une liaison métallique (avantageusement continue) sur sensiblement toute la largeur de la portion prédéfinie 5 compactée.

Selon l'invention, et de manière tout à fait intéressante, les faces latérales 5A, 5B de la portion prédéfinie 5 du conducteur électrique 2 sont sensiblement dépourvues de toute protrusion ou excroissance de matériau d'apport 9, c'est-à-dire d'une certaine quantité de matériau d'apport 9, solide, qui ferait saillie du plan moyen de l'une et / ou de l'autre desdites faces latérales 5A, 5B, et qui serait décelable à l'œil nu ou au toucher. En particulier, les faces latérales 5A, 5B de la portion prédéfinie 5 du conducteur électrique 2 sont sensiblement dépourvues de telles protrusion ou excroissance au niveau de la jonction entre lesdites faces latérales 5A, 5B et la surface d'assemblage 7 de la portion d'assemblage 6 de l'élément de connexion 3, de sorte qu'aucun congé ou bourrelet de matériau d'apport 9 solide n'est observable, à l'œil nu ou au toucher à tout le moins. Outre un éventuel avantage esthétique, l'absence de protrusion de matériau d'apport 9 confère une excellente fiabilité électrique et une très grande précision dimensionnelle au sous-ensemble 1 de connexion électrique. Il est dès alors avantageusement possible de fixer l'élément de connexion 3 (en particulier lorsque ce dernier est une cosse 3) du sous-ensemble 1 à un appareil électrique ou électromécanique, (et par exemple de manière juxtaposée à un élément de connexion 3 d'un autre ensemble 1 de connexion électrique) avec une grande précision et sans risque d'interaction mécanique ni de génération d'arc et / ou de pont électrique indésirable. Une telle caractéristique s'avère toute particulièrement intéressante dans le cas où, comme envisagé en variante ci-avant, les dimensions de la portion prédéfinie 5 compactée et de la surface d'assemblage 7 de l'élément de connexion 3 sont identiques, les faces latérales 5A, 5B de la portion prédéfinie 5 étant alignées avec les bords de la surface d'assemblage 7.

A titre illustratif, des essais comparatifs de fabrication de sous-ensembles de connexion électrique ont été réalisés afin de caractériser certains effets avantageux conférés par le procédé selon l'invention. Une première série de sous-ensembles de connexion électrique a été réalisée, de manière séquentielle connue, à partir de conducteurs électriques multibrins d'une section de 50 mm² et de cosses métalliques (éléments de connexion) de type terminal. Tout d'abord, une portion d'extrémité dénudée du conducteur électrique multibrin a été soumise à une opération de compactage de ses brins, à l'aide d'une tête de compactage par résistance classique. Après ablation de l'extrémité de la portion de conducteur compactée, la portion compactée a été brasée, en utilisant une tête de soudage par résistance classique, sur une surface d'assemblage de la cosse métallique, sur laquelle a été préalablement déposé et fixé un morceau de feuillard de matériau d'apport de brasage fort.

Une deuxième série de sous-ensembles de connexion électrique a été fabriquée conformément au procédé de l'invention (et qui plus est avec une installation de fabrication conforme elle aussi à l'invention), selon le mode de réalisation préférentiel dans lequel le compactage et le brasage sont réalisés simultanément par résistance, à l'aide d'une paire d'électrodes et d'une paire de mors formant mâchoire. Les conducteurs électriques multibrins, les cosses métalliques et le matériau d'apport de brasage sont identiques à ceux utilisés pour la première série de sous-ensembles de connexion électrique. Les sous-ensembles de connexion électrique ainsi fabriqués ont ensuite fait l'objet d'une coupe transversale au niveau de leur portion prédéfinie compactée et brasée, puis d'un polissage.

Comme cela ressort clairement de la comparaison des vues au microscope optique (Nikon^{®} Eclipse LV150N, grossissement x5), proposées aux figures 12 et 13, la portion prédéfinie 5, compactée et brasée, du conducteur électrique 2 d'un sous-ensemble de connexion fabriqué selon le procédé connu présente une protrusion de matériau d'apport 9 qui fait saillie, sous la forme d'un congé 37, du plan moyen (représenté selon une ligne en pointillés aux figures 12 et 13) d'une face latérale 5B, au niveau de la jonction entre cette face latérale 5B et la surface d'assemblage 7 de la portion d'assemblage 6 de la cosse métallique 3 (figure 12). D'une largeur de 500 µm environ, un tel congé 37 est bien décelable à l'œil nu. Au contraire, la portion prédéfinie 5, compactée et brasée, du conducteur électrique 2 d'un sous-ensemble de connexion fabriqué selon le procédé de l'invention apparaît dépourvue d'une telle protrusion de matériau d'apport 9 (figure 13).

En outre, des investigations optiques complémentaires ont permis d'observer que, dans le cas d'un sous-ensemble 1 de connexion électrique fabriqué conformément à l'invention, et pour un effort de pincement identique exercé entre les électrodes :
- les brins 4 de la portion prédéfinie 5 compactée et brasée sont plus fortement compactés ;
- le matériau d'apport 9 a diffusé plus profondément à travers la portion prédéfinie 5 selon une direction orthogonale à la surface d'assemblage 7 de la cosse métallique 3, et la couche de matériau d'apport 9, à l'interface entre la portion prédéfinie 5 compactée du conducteur électrique 2 et la surface d'assemblage 7 de la cosse 3, est d'épaisseur plus faible ;
- la surface d'assemblage 7 de la cosse 3 apparaît légèrement déformée, impactée, par les brins 4 du conducteur électrique 2.

Par ailleurs des essais mécaniques comparatifs ont été réalisés sur ces deux séries de sous-ensembles de connexion électrique et ont démontré, dans le cas du sous-ensemble réalisé conformément à l'invention, une bien meilleure résistance mécanique en cisaillement du conducteur électrique multibrin et de la cosse métallique. La meilleure diffusion du matériau d'apport de brasage entre les brins, et dans une certaine mesure, la relative incrustation des brins compactés dans la surface d'assemblage de la cosse sont susceptibles d'expliquer de telles propriétés mécaniques améliorées.

### POSSIBILITE D'APPLICATION INDUSTRIELLE

L'invention trouve son application dans le domaine technique général des procédés et installations d'assemblage de pièces, ainsi que dans le domaine technique général de la connectique électrique. Plus précisément, l'invention trouve son application dans les domaines des procédés et des installations de fabrication de sous-ensembles de connexion électrique, par exemple pour application dans le domaine des véhicules automobiles électriques, ainsi que dans le domaine des sous-ensembles de connexion électrique, pris en tant que tel.

## Revendications

1. Procédé de fabrication d'un sous-ensemble (1) de connexion électrique, comprenant une étape d'assemblage d'un conducteur électrique multibrin (2) et d'un élément de connexion (3), ladite étape d'assemblage comprenant
- une opération de fourniture dudit conducteur électrique multibrin (2) et dudit élément de connexion (3), le conducteur électrique (2) comprenant au moins une portion prédéfinie (5) dénudée, l'élément de connexion (3) présentant une portion d'assemblage (6) pourvue d'une surface d'assemblage (7),
- une opération de brasage de la portion prédéfinie (5) du conducteur électrique (2) sur ladite surface d'assemblage (7) de l'élément de connexion (3) avec un matériau d'apport (9),
**caractérisé en ce que** ladite étape d'assemblage comprend une opération de compactage de ladite portion prédéfinie (5) du conducteur électrique (2) pour compacter et fusionner au moins partiellement entre eux les brins (4) du conducteur électrique (2), les souder au moins partiellement les uns aux autres, au niveau de ladite portion prédéfinie (5), lesdites opération de compactage et opération de brasage étant réalisées de manière simultanée.

2. Procédé selon la revendication précédente, dans lequel ledit matériau d'apport (9) est un matériau d'apport de brasage fort.

3. Procédé selon l'une quelconque des revendications précédentes, dans lequel l'opération de compactage et l'opération de brasage comprennent
- le positionnement de la portion prédéfinie (5) du conducteur électrique (2) en regard de la surface d'assemblage (7) de l'élément de connexion (3), le matériau d'apport (9) étant intercalé entre ladite portion prédéfinie (5) et ladite surface d'assemblage (7) ;
- le pincement de la portion prédéfinie (5) du conducteur électrique (2), du matériau d'apport (9) et de la portion d'assemblage (6) de l'élément de connexion (3) entre une première électrode (10) et une deuxième électrode (11) selon une première direction (A-A') de pincement,
- la réalisation du compactage et du brasage de la portion prédéfinie (5) du conducteur électrique (2) sur ladite surface d'assemblage (7) de l'élément de connexion (3), par passage d'un courant électrique entre les première et deuxième électrodes (10, 11), la portion prédéfinie (5) du conducteur électrique (2) étant encadrée, selon une deuxième direction (B-B') perpendiculaire à ladite première direction (A-A'), par les mors (12, 13) d'une mâchoire (14).

4. Procédé selon la revendication précédente, dans lequel la première électrode (10) est en contact avec la portion prédéfinie (5) du conducteur électrique (2) au cours desdites opérations de compactage et de brasage, ladite première électrode (10) et lesdits mors (12, 13) étant prévus de manière à ce que leurs faces positionnées en regard de la portion prédéfinie (5) du conducteur électrique (2) délimitent entre elles la forme que doit acquérir, après compactage et brasage, la portion prédéfinie (5) du conducteur électrique (2) pincée.

5. Procédé selon l'une quelconque des revendications précédentes, dans lequel ladite portion prédéfinie (5) du conducteur électrique (2) et ladite surface d'assemblage (7) de l'élément de connexion (3) sont fournies initialement dépourvues dudit matériau d'apport (9), ledit procédé comprenant une opération de fourniture du matériau d'apport (9) au cours desdites opérations de compactage et de brasage depuis une source externe de matériau d'apport (9).

6. Procédé selon la revendication précédente, dans lequel le matériau d'apport (9) est fourni selon une troisième direction (C-C') coplanaire à une direction d'extension (D-D') longitudinale moyenne du conducteur électrique (2) et à la première direction (A-A') de pincement des première et deuxième électrodes (10, 11).

7. Procédé selon l'une quelconque des revendications précédentes, dans lequel le matériau d'apport est sous forme de feuillard (16).

8. Installation de fabrication d'un sous-ensemble (1) de connexion électrique, comprenant un dispositif d'assemblage (17) d'un conducteur électrique multibrin (2) et d'un élément de connexion (3), le conducteur électrique (2) comprenant au moins une portion prédéfinie (5) dénudée, l'élément de connexion (3) présentant une portion d'assemblage (6) pourvue d'une surface d'assemblage (7), ledit dispositif d'assemblage (17) comprenant des moyens de brasage de la portion prédéfinie (5) du conducteur électrique (2) sur ladite surface d'assemblage (7) de l'élément de connexion (3) avec un matériau d'apport (9), **caractérisée en ce que** ledit dispositif d'assemblage (17) comprend des moyens de compactage de ladite portion prédéfinie (5) du conducteur électrique (2) pour compacter et fusionner au moins partiellement entre eux les brins (4) du conducteur électrique (2), les souder au moins partiellement les uns aux autres, au niveau de ladite portion prédéfinie (5), ledit dispositif d'assemblage (17) étant conçu pour actionner simultanément lesdits moyens de compactage et de brasage de sorte que les brins (4) du conducteur électrique (2), au niveau de ladite portion prédéfinie (5), peuvent être compactés et fusionnés au moins partiellement entre eux en même temps que la portion prédéfinie (5) du conducteur électrique (2) est brasée sur ladite surface d'assemblage (7) de l'élément de connexion (3) avec ledit matériau d'apport (9).

9. Installation selon la revendication précédente, dans laquelle lesdits moyens de brasage sont aptes à braser la portion prédéfinie (5) du conducteur électrique (2) sur ladite surface d'assemblage (7) de l'élément de connexion (3) avec un matériau d'apport (9) de brasage fort.

10. Installation selon l'une quelconque des revendications 8 et 9, dans laquelle lesdits moyens de compactage et moyens de brasage comprennent
- des moyens de positionnement (18, 19, 35) relatifs de la portion prédéfinie (5) du conducteur électrique (2) en regard de la surface d'assemblage (7) de l'élément de connexion (3), et du matériau d'apport (9) intercalé entre ladite portion prédéfinie (5) et ladite surface d'assemblage (7) ;
- une première électrode (10) et une deuxième électrode (11), aptes à pincer entre elles la portion prédéfinie (5) du conducteur électrique (2), le matériau d'apport (9) et la portion d'assemblage (6) de l'élément de connexion (3) selon une première direction (A-A') de pincement,
- une mâchoire (14) dont les mors (12, 13) sont aptes à encadrer entre eux ladite portion prédéfinie (5) du conducteur électrique (2) selon une deuxième direction (B-B') perpendiculaire à ladite première direction (A-A') de pincement,
- et un système d'alimentation électrique conçu pour faire passer entre les première et deuxième électrodes (10, 11) un courant électrique pour permettre le compactage et la fusion des brins (4) de la portion prédéfinie (5) du conducteur électrique (2) et le brasage de la portion prédéfinie (5) du conducteur électrique (2) sur ladite surface d'assemblage (7) de l'élément de connexion (3).

11. Installation selon la revendication précédente, dans laquelle la première électrode (10) est destinée à venir en contact avec la portion prédéfinie (5) du conducteur électrique (2), les faces respectives de ladite première électrode (10) et desdits mors (12, 13) destinées à venir en regard de la portion prédéfinie (5) du conducteur électrique (2) délimitant entre elles la forme que doit acquérir, après compactage, fusion et brasage, la portion prédéfinie (5) du conducteur électrique (2) pincée.

12. Installation selon l'une quelconque des revendications 10 et 11, dans laquelle le dispositif d'assemblage (17) comprend, pour chacun des mors (12, 13) de la mâchoire (14), un actionneur conçu pour déplacer le mors (12, 13) en translation selon ladite deuxième direction (B-B') entre une position ouverte et une position fermée de la mâchoire (14), lequel actionneur comprend un vérin (27, 28) dont la tige est apte à se déplacer selon une direction sécante à ladite deuxième direction (B-B') et qui est reliée audit mors (12, 13) par un moyen de renvoi d'angle à came (29, 30), la came (29, 30) du moyen de renvoi d'angle présentant de préférence un profil prévu pour interdire toute translation du mors (12, 13) correspondant selon ladite deuxième direction (B-B') dans un sens d'ouverture de la mâchoire (14) lorsque ladite mâchoire (14) est en position fermée.

13. Installation selon l'une quelconque des revendications 8 à 12, laquelle comprend un moyen de fourniture (35) du matériau d'apport (9) depuis une source de matériau d'apport (9) distincte du conducteur électrique (2) et de l'élément de connexion (3), le moyen de fourniture (35) du matériau d'apport (9) étant préférentiellement conçu pour fournir, de préférence de manière automatisée, le matériau d'apport (9) sous forme de feuillard (16).

14. Installation selon la revendication précédente, dans laquelle le moyen de fourniture (35) du matériau d'apport (9) est conçu et configuré pour fournir ledit matériau d'apport (9) selon une troisième direction (C-C') coplanaire à une direction d'extension (D-D') longitudinale moyenne du conducteur électrique (2) et à la première direction (A-A') de pincement des première et deuxième électrodes (9, 10).

15. Sous-ensemble (1) de connexion électrique, comprenant au moins un conducteur électrique (2) multibrin et au moins un élément de connexion (3), le conducteur électrique (2) comprenant au moins une portion prédéfinie (5), l'élément de connexion (3) présentant une portion d'assemblage (6) pourvue d'une surface d'assemblage (7), ladite portion prédéfinie (5) du conducteur électrique (2) étant brasée à l'aide d'un matériau d'apport (9) sur ladite surface d'assemblage (7), ledit matériau d'apport (9) étant de préférence un matériau d'apport de brasage fort, **caractérisé en ce que** les brins (4) du conducteur électrique (2) sont compactés et au moins partiellement fusionnés entre eux, soudés au moins partiellement les uns aux autres, au niveau de ladite portion prédéfinie, ladite portion prédéfinie (5) du conducteur électrique (2) présentant deux faces latérales (5A, 5B) qui s'étendent l'une en regard de l'autre, de part et d'autre d'une direction (D-D') d'extension longitudinale moyenne du conducteur électrique (2), et de manière sécante à ladite surface d'assemblage (7), lesdites faces latérales (5A, 5B) étant sensiblement dépourvues de protrusion de matériau d'apport (9), en particulier au niveau de la jonction entre lesdites faces latérales (5A, 5B) et la surface d'assemblage (7) de la portion d'assemblage (6) de l'élément de connexion (3).

## Patentansprüche

1. Verfahren zur Herstellung einer Unter-Baugruppe (1) einer elektrischen Verbindung, umfassend einen Schritt des Zusammenfügens eines mehradrigen elektrischen Leiters (2) und eines Verbindungselements (3), wobei der Schritt des Zusammenfügens Folgendes umfasst
- einen Vorgang des Bereitstellens des mehradrigen elektrischen Leiters (2) und des Verbindungselements (3), wobei der elektrische Leiter (2) mindestens einen abisolierten vordefinierten Abschnitt (5) umfasst, wobei das Verbindungselement (3) einen Montageabschnitt (6) aufweist, der mit einer Montagefläche (7) versehen ist,
- einen Vorgang des Lötens des vordefinierten Abschnitts (5) des elektrischen Leiters (2) auf die Montagefläche (7) des Verbindungselements (3) mit einem Zusatzmaterial (9),
**dadurch gekennzeichnet, dass** der Schritt des Zusammenfügens einen Vorgang des Kompaktierens des vordefinierten Abschnitts (5) des elektrischen Leiters (2) umfasst, um die Adern (4) des elektrischen Leiters (2) an dem vordefinierten Abschnitt (5) zu kompaktieren und zumindest teilweise miteinander zu verschmelzen, zumindest teilweise miteinander zu verschweißen, wobei der Vorgang des Kompaktierens und der Vorgang des Lötens gleichzeitig durchgeführt werden.

2. Verfahren nach dem vorhergehenden Anspruch, wobei das Zusatzmaterial (9) ein Hartlot-Zusatzmaterial ist.

3. Verfahren nach einem der vorhergehenden Ansprüche, wobei der Vorgang des Kompaktierens und der Vorgang des Lötens Folgendes umfassen
- Positionieren des vordefinierten Abschnitts (5) des elektrischen Leiters (2) in Bezug auf die Montagefläche (7) des Verbindungselements (3), wobei das Zusatzmaterial (9) zwischen dem vordefinierten Abschnitt (5) und der Montagefläche (7) eingefügt wird;
- das Einklemmen des vordefinierten Abschnitts (5) des elektrischen Leiters (2), des Zusatzmaterials (9) und des Montageabschnitts (6) des Verbindungselements (3) zwischen einer ersten Elektrode (10) und einer zweiten Elektrode (11) entlang einer ersten Richtung (A-A') der Klemmung,
- Durchführen des Kompaktierens und des Lötens des vordefinierten Abschnitts (5) des elektrischen Leiters (2) auf der Montagefläche (7) des Verbindungselements (3) durch Hindurchleiten eines elektrischen Stroms zwischen der ersten und der zweiten Elektrode (10, 11), wobei der vordefinierte Abschnitt (5) des elektrischen Leiters (2) in einer zweiten Richtung (B-B') senkrecht zu der ersten Richtung (A-A') von den Backen (12, 13) einer Klemme (14) eingefasst ist.

4. Verfahren nach dem vorhergehenden Anspruch, wobei die erste Elektrode (10) während der genannten Vorgänge des Kompaktierens und Lötens mit dem vordefinierten Abschnitt (5) des elektrischen Leiters (2) in Kontakt steht, wobei die erste Elektrode (10) und die Backen (12, 13) so vorgesehen sind, dass ihre bezüglich des vordefinierten Abschnitts (5) des elektrischen Leiters (2) positionierten Flächen zwischen ihnen die Form begrenzen, welche der vordefinierte Abschnitt (5) des eingeklemmten elektrischen Leiters (2) nach dem Kompaktieren und Löten annehmen soll.

5. Verfahren nach einem der vorhergehenden Ansprüche, wobei der vordefinierte Abschnitt (5) des elektrischen Leiters (2) und die Montagefläche (7) des Verbindungselements (3) anfänglich ohne das Zusatzmaterial (9) bereitgestellt werden, wobei das Verfahren einen Vorgang des Bereitstellens des Zusatzmaterials (9) von einer externen Quelle des Zusatzmaterials (9) während der Vorgänge des Kompaktierens und des Lötens umfasst.

6. Verfahren nach dem vorhergehenden Anspruch, wobei das Zusatzmaterial (9) in einer dritten Richtung (C-C') zugeführt wird, die koplanar zu einer Haupt-Längs-Ausdehnungsrichtung (D-D') des elektrischen Leiters (2) und zu der ersten Richtung (A-A') der Klemmung der ersten und zweiten Elektroden (10, 11) ist.

7. Verfahren nach einem der vorhergehenden Ansprüche, wobei der Zusatzwerkstoff in Form eines Bandes (16) vorliegt.

8. Anlage zur Herstellung einer Unter-Baugruppe (1) einer elektrischen Verbindung, die eine Vorrichtung (17) zum Zusammenfügen eines mehradrigen elektrischen Leiters (2) und eines Verbindungselements (3) umfasst, wobei der elektrische Leiter (2) mindestens einen abisolierten vordefinierten Abschnitt (5) umfasst, das Verbindungselement (3) einen Montageabschnitt (6) aufweist, der mit einer Montagefläche (7) versehen ist, wobei die Vorrichtung (17) zum Zusammenfügen Mittel zum Löten des vordefinierten Abschnitts (5) des elektrischen Leiters (2) auf die Montagefläche (7) des Verbindungselements (3) mit einem Zusatzmaterial (9) umfasst, **dadurch gekennzeichnet, dass** die Vorrichtung (17) zum Zusammenfügen Mittel zum Kompaktieren des vordefinierten Abschnitts (5) des elektrischen Leiters (2) umfasst, um die Adern (4) des elektrischen Leiters (2) an dem vordefinierten Abschnitt (5) zu kompaktieren und zumindest teilweise miteinander zu verschmelzen, zumindest teilweise miteinander zu verschweißen, wobei die Vorrichtung (17) zum Zusammenfügen dazu eingerichtet ist, die Mittel zum Kompaktieren und Löten gleichzeitig zu betätigen, so dass die Adern (4) des elektrischen Leiters (2) an dem vordefinierten Abschnitt (5) kompaktiert und zumindest teilweise miteinander verschmolzen werden können, während gleichzeitig der vordefinierte Abschnitt (5) des elektrischen Leiters (2) an der Montagefläche (7) des Verbindungselements (3) mit dem Zusatzmaterial (9) verlötet wird.

9. Anlage nach dem vorhergehenden Anspruch, wobei Mittel zum Löten dazu geeignet sind, den vordefinierten Abschnitt (5) des elektrischen Leiters (2) auf der Montagefläche (7) des Verbindungselements (3) mit einem Hartlot-Zusatzmaterial (9) zu verlöten.

10. Anlage nach einem der Ansprüche 8 oder 9, wobei die Verdichtungsmittel und Lötmittel Folgendes umfassen
- Mittel zur relativen Positionierung (18, 19, 35) des vordefinierten Abschnitts (5) des elektrischen Leiters (2) in Bezug auf die Montagefläche (7) des Verbindungselements (3) und des Zusatzmaterials (9), das zwischen dem vordefinierten Abschnitt (5) und der Montagefläche (7) eingefügt ist;
- eine erste Elektrode (10) und eine zweite Elektrode (11), die dazu geeignet sind, den vordefinierten Abschnitt (5) des elektrischen Leiters (2), das Zusatzmaterial (9) und den Montageabschnitt (6) des Verbindungselements (3) entlang einer ersten Richtung (A-A') der Klemmung miteinander zu klemmen,
- eine Klemme (14), deren Backen (12, 13) dazu geeignet sind, den vordefinierten Abschnitt (5) des elektrischen Leiters (2) in einer zweiten Richtung (B-B') senkrecht zu der ersten Richtung (A-A') der Klemmung zwischen sich einzurahmen,
- und ein Stromversorgungssystem, das dazu eingerichtet ist, zwischen der ersten und der zweiten Elektrode (10, 11) einen elektrischen Strom fließen zu lassen, um das Kompaktieren und Verschmelzen der Adern (4) des vordefinierten Abschnitts (5) des elektrischen Leiters (2) und das Verlöten des vordefinierten Abschnitts (5) des elektrischen Leiters (2) mit der Montagefläche (7) des Verbindungselements (3) zu ermöglichen.

11. Anlage nach dem vorhergehenden Anspruch, wobei die erste Elektrode (10) dazu bestimmt ist, mit dem vordefinierten Abschnitt (5) des elektrischen Leiters (2) in Kontakt zu kommen, wobei die jeweiligen Flächen der ersten Elektrode (10) und der Backen (12, 13), die dazu bestimmt sind, dem vordefinierten Abschnitt (5) des elektrischen Leiters (2) zugewandt zu liegen, zwischen sich die Form begrenzen, die der vordefinierte Abschnitt (5) des eingeklemmten elektrischen Leiters (2) nach dem Kompaktieren, Verschmelzen und Löten annehmen soll.

12. Anlage nach einem der Ansprüche 10 und 11, bei der die Vorrichtung (17) zum Zusammenfügen für jede der Backen (12, 13) der Klemme (14) einen Aktuator umfasst, der dazu ausgelegt ist, die Backe (12, 13) translatorisch in der zweiten Richtung (B-B') zwischen einer offenen Position und einer geschlossenen Position der Klemme (14) zu bewegen, wobei der Aktuator einen Zylinder (27, 28), dessen Stange sich in einer die zweite Richtung (B-B') schneidenden Richtung verschieben kann und der mit der Backe (12, 13) über ein Winkelumlenkmittel mit Nocken (29, 30) verbunden ist, aufweist, wobei der Nocken (29, 30) des Winkelumlenkmittels vorzugsweise ein Profil aufweist, das dazu vorgesehen ist, jede Translation der entsprechenden Backe (12, 13) in der zweiten Richtung (B-B') in einer Öffnungsrichtung der Klemme (14) zu unterbinden, wenn sich die Klemme (14) in der geschlossenen Position befindet.

13. Anlage nach einem der Ansprüche 8 bis 12, welche eine Einrichtung (35) zum Zuführen des Zusatzmaterials (9) aus einer von dem elektrischen Leiter (2) und dem Verbindungselement (3) separaten Quelle des Zusatzmaterials (9) umfasst, wobei die Einrichtung (35) zum Zuführen des Zusatzmaterials (9) vorzugsweise dazu ausgelegt ist, das Zusatzmaterial (9) in Form eines Bandes (16) zuzuführen, vorzugsweise auf automatisierte Weise.

14. Anlage nach dem vorhergehenden Anspruch, wobei die Einrichtung (35) zum Zuführen des Zusatzmaterials (9) so ausgelegt und konfiguriert ist, dass sie das Zusatzmaterial (9) entlang einer dritten Richtung (C-C') zuführt, die koplanar mit einer Haupt-Längs-Ausdehnungsrichtung (D-D') des elektrischen Leiters (2) und mit der ersten Richtung (A-A') der Klemmung der ersten und zweiten Elektroden (9, 10) ist.

15. Unter-Baugruppe (1) einer elektrischen Verbindung, die mindestens einen mehradrigen elektrischen Leiter (2) und mindestens ein Verbindungselement (3) umfasst, wobei der elektrische Leiter (2) mindestens einen vordefinierten Abschnitt (5) umfasst, wobei das Verbindungselement (3) einen Montageabschnitt (6) aufweist, der mit einer Montagefläche (7) versehen ist, wobei der vordefinierte Abschnitt (5) des elektrischen Leiters (2) mit einem Zusatzmaterial (9) an die Montagefläche (7) gelötet ist, wobei das Zusatzmaterial (9) vorzugsweise ein Hartlot-Zusatzmaterial ist, **dadurch gekennzeichnet, dass** die Adern (4) des elektrischen Leiters (2) an dem vordefinierten Abschnitt kompaktiert und zumindest teilweise miteinander verschmolzen, zumindest teilweise miteinander verschweißt sind, wobei der vordefinierte Abschnitt (5) des elektrischen Leiters (2) zwei Seitenflächen (5A, 5B) aufweist, die sich einander gegenüberliegend beidseitig zu einer Haupt-Längs-Ausdehnungsrichtung (D-D') des elektrischen Leiters (2) erstrecken, und in einer die Montagefläche (7) schneidenden Weise, wobei die Seitenflächen (5A, 5B) im Wesentlichen frei von Vorsprüngen des Zusatzmaterials (9) sind, insbesondere im Bereich der Verbindung zwischen den Seitenflächen (5A, 5B) und der Montagefläche (7) des Montageabschnitts (6) des Verbindungselements (3).

## Claims

1. Method for manufacturing an electrical connection subassembly (1), comprising a step of assembling a multistrand electrical conductor (2) and a connection element (3), said assembly step comprising
- an operation of providing said multistrand electrical conductor (2) and said connection element (3), the electrical conductor (2) comprising at least one bared predefined portion (5), the connection element (3) having an assembly portion (6) provided with an assembly surface (7),
- an operation of brazing the predefined portion (5) of the electrical conductor (2) on said assembly surface (7) of the connection element (3) with a filler material (9),
**characterised in that** said assembly step comprises an operation of compacting said predefined portion (5) of the electrical conductor (2) to compact and at least partially fuse together the strands (4) of the electrical conductor (2), to at least partially weld them to each other, at said predefined portion (5), said compacting operation and brazing operation being performed simultaneously.

2. Method according to the preceding claim, wherein said filler material (9) is a strong-brazing filler material.

3. Method according to either one of the preceding claims, wherein the compacting operation and the brazing operation comprise
- the positioning of the predefined portion (5) of the electrical conductor (2) facing the assembly surface (7) of the connection element (3), the filler material (9) being interposed between said predefined portion (5) and said assembly surface (7);
- the pinching of the predefined portion (5) of the electrical conductor (2), of the filler material (9) and of the assembly portion (6) of the connection element (3) between a first electrode (10) and a second electrode (11) in a first pinching direction (A-A');
- the implementation of the compacting and brazing of the predefined portion (5) of the electrical conductor (2) on said assembly surface (7) of the connection element (3), by passing an electric current between the first and second electrodes (10, 11), the predefined portion (5) of the electrical conductor (2) being framed, in a second direction (B-B') perpendicular to said first direction (A-A'), by the jaws (12, 13) of a clamp (14).

4. Method according to the preceding claim, wherein the first electrode (10) is in contact with the predefined portion (5) of the electrical conductor (2) during said compacting and brazing operations, said first electrode (10) and said jaws (12, 13) being designed so that their faces positioned facing the predefined portion (5) of the electrical conductor (2) delimit between them the form that the pinched predefined portion (5) of the electrical conductor (2) must acquire after compacting and brazing.

5. Method according to any one of the preceding claims, wherein said predefined portion (5) of the electrical conductor (2) and said assembly surface (7) of the connection element (3) are provided initially without any of said filler material (9), said method comprising an operation of supplying filler material (9) during said compacting and brazing operations from an external source of filler material (9).

6. Method according to the preceding claim, wherein the filler material (9) is supplied in a third direction (C-C') coplanar with a mean longitudinal extension direction (D-D') of the electrical conductor (2) and with the first direction (A-A') of pinching the first and second electrodes (10, 11).

7. Method according to any one of the preceding claims, wherein the filler material is in strip form (16).

8. Installation for manufacturing an electrical-connection subassembly (1), comprising a device (17) for assembling a multistrand electrical conductor (2) and a connection element (3), the electrical conductor (2) comprising at least one bared predefined portion (5), the connection element (3) having an assembly portion (6) provided with an assembly surface (7), said assembly device (17) comprising means for brazing the predefined portion (5) of the electrical conductor (2) on said assembly surface (7) of the connection element (3) with a filler material (9), **characterised in that** said assembly device (17) comprises means for compacting said predefined portion (5) of the electrical conductor (2) to compact and at least partially fuse together the strands (4) of the electrical conductor (2), to at least partially weld them to each other, at said predefined portion (5), said assembly device (17) being designed to simultaneously actuate said compacting and brazing means so that the strands (4) of the electrical conductor (2), at said predefined portion (5), can be compacted and at least partially fused together at the same time as the predefined portion (5) of the electrical conductor (2) is brazed on said assembly surface (7) of the connection element (3) with said filler material (9).

9. Installation according to the preceding claim, wherein said brazing means are able to braze the predefined portion (5) of the electrical conductor (2) on said assembly surface (7) of the connection element (3) with a strong-brazing filler material (9).

10. Installation according to either one of claims 8 and 9, wherein said compacting and brazing means comprise
- means (18, 19, 35) for the relative positioning of the predefined portion (5) of the electrical conductor (2) facing the assembly surface (7) of the connection element (3), and of the filler material (9) interposed between said predefined portion (5) and said assembly surface (7);
- a first electrode (10) and a second electrode (11), able to pinch between them the predefined portion (5) of the electrical conductor (2), the filler material (9) and the assembly portion (6) of the connection element (3) in a first pinching direction (A-A');
- a clamp (14) the jaws (12, 13) of which are able to frame between them said predefined portion (5) of the electrical conductor (2) in a second direction (B-B') perpendicular to said first pinching direction (A-A');
- and an electrical supply system designed to pass an electric current between the first and second electrodes (10, 11) to allow the compacting and fusion of the strands (4) of the predefined portion (5) of the electrical conductor (2) and the brazing of the predefined portion (5) of the electrical conductor (2) on said assembly surface (7) of the connection element (3).

11. Installation according to the preceding claim, wherein the first electrode (10) is intended to come into contact with the predefined portion (5) of the electrical conductor (2), the respective faces of said first electrode (10) and of said jaws (12, 13) intended to come facing the predefined portion (5) of the electrical conductor (2) delimiting between them the form that the predefined portion (5) of the pinched electrical conductor (2) must acquire after compacting, fusion and brazing.

12. Installation according to either one of claims 10 and 11, wherein the assembly device (17) comprises, for each of the jaws (12, 13) of the clamp (14), an actuator designed to move the jaw (12, 13) in translation in said second direction (B-B') between an open position and a closed position of the clamp (40), said actuator comprising a cylinder (27, 28) the rod of which is able to move in a direction secant to said second direction (B-B') and is connected to said jaw (12, 13) by an angle-transmission means with a cam (29, 30), the cam (29, 30) of the angle-transmission means preferably having a profile designed to prevent any translation of the corresponding jaw (12, 13) in said second direction (B-B') in a direction of opening the clamp (14) when said clamp (14) is in the closed position.

13. Installation according to any one of claims 8 to 12, which comprises a means (35) for supplying the filler material (9) from a source of filler material (9) distinct from the electrical conductor (2) and connection element (3), the means (35) for supplying the filler material (9) preferentially being designed to supply the filler material (9), preferably in an automated manner, in strip form (16).

14. Installation according to the preceding claim, wherein the means (35) for supplying the filler material (9) is designed and configured to supply said filler material (9) in a third direction (C-C') coplanar with a mean longitudinal extension direction (D-D') of said electrical conductor (2) and with the first direction (A-A') of pinching of the first and second electrodes (9, 10).

15. Electrical connection subassembly (1), comprising at least one multistrand electrical conductor (2) and at least one connection element (3), the electrical conductor (2) comprising at least one predefined portion (5), the connection element (3) having an assembly portion (6) provided with an assembly surface (7), said predefined portion (5) of the electrical conductor (2) being brazed by means of a filler material (9) on said assembly surface (7), said filler material (9) preferably being a strong-brazing filler material, **characterised in that** the strands (4) of the electrical conductor (2) are compacted and at least partially fused together, at least partially welded to each other, at said predefined portion, said predefined portion (5) of the electrical conductor (2) having two lateral faces (5A, 5B) that extend facing each other, on either side of a mean longitudinal extension direction (D-D') of the electrical conductor (2), and so as to be secant with said assembly surface (7), said lateral faces (5A, 5B) being substantially devoid of any protrusion of filler material (9), in particular at the junction between said lateral faces (5A, 5B) and the assembly surface (7) of the assembly portion (6) of the connection element (3).
